(19) Europäisches Patentamt
European Patent Office
Office européen des brevets

(11) EP 4 202 322 A1

(12) EUROPEAN PATENT APPLICATION
published in accordance with Art. 153(4) EPC

(43) Date of publication:
28.06.2023 Bulletin 2023/26

(51) International Patent Classification (IPC):
F25B 49/02 (2006.01)    G01N 17/04 (2006.01)
F25B 47/00 (2006.01)

(21) Application number: 21860872.7

(52) Cooperative Patent Classification (CPC):
F25B 47/00; F25B 49/02; G01N 17/04

(22) Date of filing: 11.05.2021

(86) International application number:
PCT/JP2021/017935

(87) International publication number:
WO 2022/044440 (03.03.2022 Gazette 2022/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.08.2020 JP 2020140924

(71) Applicant: Panasonic Intellectual Property
Management Co., Ltd.
Osaka-shi, Osaka 540-6207 (JP)

(72) Inventor: NAKAJIMA, Takahito
Osaka-shi, Osaka 540-6207 (JP)

(74) Representative: Eisenführ Speiser
Patentanwälte Rechtsanwälte PartGmbB
Postfach 31 02 60
80102 München (DE)

(54) **REFRIGERATION CYCLE SYSTEM AND ANALYSIS METHOD**

(57) A refrigeration cycle system of the present disclosure includes: a plurality of refrigeration cycle devices; and a processing device that communicates with the plurality of refrigeration cycle devices via a network. Each of the plurality of refrigeration cycle devices includes: a refrigerant pipe that connects the first heat exchanger, the compressor, the second heat exchanger, and the expansion mechanism, and through which a refrigerant is circulated; one or a plurality of corrosion sensors that acquire information related to a corrosion of the refrigerant pipe; a first storage that stores therein the information related to the corrosion, the information being acquired by the one or the plurality of corrosion sensors; and a first communicator that transmits the information related to the corrosion via the network, the information being stored in the first storage. The processing device includes: a processor; a second storage that stores therein a program executed by the processor; and a second communicator that receives the information related to the corrosion via the network. The processor is configured: to detect corrosion of the refrigerant pipe based on the information related to the corrosion; and to analyze a result of corrosion detection.

Fig. 2

**Description**

TECHNICAL FIELD

The present disclosure relates to a refrigeration cycle system and an analysis method.

BACKGROUND ART

As an example of such a refrigeration cycle device, Patent Document 1 discloses an absorption refrigerator capable of detecting a local corrosion.

Patent Literature 1 discloses an absorption refrigerator provided with a corrosion detecting unit that detects corrosion of a constituent material of an inner wall of the refrigerator. The corrosion detecting unit in the refrigerator described in Patent Literature 1 includes a pair of electrodes that are disposed in a manner immersed in an absorbent inside the device, a measuring unit that measures a current flowing between the electrodes, and a warning unit that issues a warning when the measured current exceeds a predetermined level.

PRIOR ART DOCUMENT

PATENT DOCUMENT

Patent Literature 1: JP 2008-286441 A

SUMMARY OF THE INVENTION

PROBLEMS TO BE SOLVED BY THE INVENTION

In recent years, there has been a demand for a refrigeration cycle system and an analysis method for detecting corrosions of a plurality of refrigeration cycle devices and analyzing results of corrosion detections.

Therefore, an object of the present disclosure is to solve the problem described above, and to provide a refrigeration cycle system and an analysis method for detecting corrosions of a plurality of refrigeration cycle devices and analyzing results of corrosion detections.

MEANS FOR SOLVING THE PROBLEMS

A refrigeration cycle system according to one aspect of the present disclosure includes: a plurality of refrigeration cycle devices each of which includes a first heat exchanger, a compressor, a second heat exchanger, and an expansion mechanism; and a processing device that communicates with the plurality of refrigeration cycle devices via a network, wherein each of the plurality of refrigeration cycle devices includes: a refrigerant pipe that connects the first heat exchanger, the compressor, the second heat exchanger, and the expansion mechanism, and through which a refrigerant is circulated; one or a plurality of corrosion sensors that acquire information related to a corrosion of the refrigerant pipe; a first storage that stores therein the information related to the corrosion, the information being acquired by the one or the plurality of corrosion sensors; and a first communicator that transmits the information related to the corrosion via the network, the information being stored in the first storage; the processing device includes: a processor; a second storage that stores therein a program executed by the processor; and a second communicator that receives the information related to the corrosion via the network, and the processor is configured: to detect corrosion of the refrigerant pipe based on the information related to the corrosion; and to analyze a result of corrosion detection.

An analysis method according to an aspect of the present disclosure is an analysis method for analyzing a plurality of refrigeration cycle devices based on corrosion of a refrigerant pipe, the analysis method being executed by a computer and comprising: acquiring information related to a corrosion of a refrigerant pipe, in each of the plurality of refrigeration cycle devices; detecting a corrosion of the refrigerant pipe based on the information related to the corrosion; and analyzing a result of detecting the corrosion.

EFFECTS OF THE INVENTION

According to the present disclosure, it becomes possible to detect corrosions of a plurality of refrigeration cycle devices, and to analyze results of the corrosion detections.

BRIEF DESCRIPTION OF THE DRAWINGS

FIG. 1 is a schematic of an example of a refrigeration cycle system according to a first embodiment of the present disclosure.
FIG. 2 is a block diagram of an example of the refrigeration cycle system according to the first embodiment of the present disclosure.
FIG. 3 is a schematic diagram of an example of the refrigeration cycle device.
FIG. 4 is a schematic illustrating an example of a corrosion sensor.
FIG. 5A is a graph illustrating a relationship between a corrosion current detected by the corrosion sensor in FIG. 4 and elapsed time.
FIG. 5B is an enlarged view of a part of the corrosion current in FIG. 5A.
FIG. 6 is a schematic illustrating a refrigerant pipe according to another example.
FIG. 7 is a schematic illustrating another example of a corrosion sensor according to the other example.
FIG. 8 is a graph illustrating a relationship between an electric resistance detected by the corrosion sensor in FIG. 7 and the elapsed time.
FIG. 9 is a graph illustrating a relationship between a sectional area ratio calculated based on the electric resistance in FIG. 8 and the time elapsed.

FIG. 10 is a schematic diagram for explaining an example of prediction of a lifetime of a refrigerant pipe.

FIG. 11 is a flowchart illustrating an example of an operation of the refrigeration cycle system according to the first embodiment of the present disclosure.

FIG. 12 is a flowchart illustrating an example of an analyzing step.

FIG. 13 is a schematic diagram of an example of a refrigeration cycle system according to a second embodiment of the present disclosure.

FIG. 14 is a flowchart illustrating an example of an operation of a refrigeration cycle system according to a second embodiment of the present disclosure.

FIG. 15 is a block diagram of an example of a refrigeration cycle system according to a third embodiment of the present disclosure.

FIG. 16 is a schematic diagram for explaining an example of a refrigeration cycle system according to the third embodiment of the present disclosure.

FIG. 17 is a flowchart illustrating an example of an operation of the refrigeration cycle system according to the third embodiment of the present disclosure.

FIG. 18 is a flowchart illustrating an operation of a refrigeration cycle device according to a modification of the third embodiment of the present disclosure.

FIG. 19 is a schematic diagram for explaining an example of a refrigeration cycle system according to a fourth embodiment of the present disclosure.

FIG. 20 is a flowchart illustrating an operation of a refrigeration cycle system according to a modification of the fourth embodiment of the present disclosure.

MODES FOR CARRYING OUT THE INVENTION

(Background to present disclosure)

In a refrigeration cycle device, a detection of a corrosion of a refrigerant pipe has been put in use. The inventors have considered acquiring information of a corrosion of a refrigerant pipe in each of a plurality of refrigeration cycle devices and providing various services based on the acquired corrosion information. To achieve this end, the inventors have considered detecting corrosions of a plurality of refrigeration cycle devices and analyzing the results of the corrosion detections. The inventors have also considered notifying, based on the analysis results, maintenance information for the refrigeration cycle devices, creating corrosion maps, and predicting demands for replacements of the refrigeration cycle devices.

For example, the inventors have considered causing each of a plurality of refrigeration cycle devices to transmit corrosion-related information to a processing device such as a server, and causing the processing device to detect a corrosion of a refrigerant pipe and to predict a failure of the refrigeration cycle device based on the result of the corrosion detection. Accordingly, the inventors have come up with an idea of sending notifications such as those prompting maintenance, repairs, or replacements to users who are using the refrigeration cycle devices.

In addition, the inventors have considered creating a corrosion map representing corrosion levels within some region, by mapping the information related to the corrosions with position information of the refrigeration cycle devices. Through these attempts, the inventors have come up with an idea of determining whether troubles resultant of corrosions are local phenomena or countrywide phenomena. Furthermore, the inventors also have come up with an idea of mapping environment information of environments where the refrigeration cycle devices are located and determining causes of troubles resultant of corrosions.

The inventors have also considered mapping information related to the corrosions to weather information of the regions where the refrigeration cycle devices are located and predicting the lifetime of the refrigeration cycle device based on the weather information. Based on this idea, the inventors have come up with an idea of predicting the demands for replacements of the refrigeration cycle devices, for example.

As described above, the inventors have discovered that various services can be provided by detecting corrosions in a plurality of refrigeration cycle devices and analyzing the results of the corrosion detections.

Based on these novel findings, the inventors have arrived at the following disclosure.

A refrigeration cycle system according to a first aspect of the present disclosure includes:

    a plurality of refrigeration cycle devices each of which includes a first heat exchanger, a compressor, a second heat exchanger, and an expansion mechanism; and
    a processing device that communicates with the plurality of refrigeration cycle devices via a network, wherein
    each of the plurality of refrigeration cycle devices includes:

        a refrigerant pipe that connects the first heat exchanger, the compressor, the second heat exchanger, and the expansion mechanism, and through which a refrigerant is circulated;
        one or a plurality of corrosion sensors that acquire information related to a corrosion of the refrigerant pipe;
        a first storage that stores therein the information related to the corrosion, the information being acquired by the one or the plurality of corrosion sensors; and
        a first communicator that transmits the information related to the corrosion via the network, the information being stored in the first storage;

the processing device includes:

a processor;
a second storage that stores therein a program executed by the processor; and
a second communicator that receives the information related to the corrosion via the network, and

the processor is configured:

to detect a corrosion of the refrigerant pipe based on the information related to the corrosion; and
to analyze a result of detecting the corrosion.

With such a configuration, it becomes possible to detect corrosions of the plurality of refrigeration cycle devices, and to analyze the result of the corrosion detection.

In a refrigeration cycle system according to a second aspect of the present disclosure, the processor in the processing device may be configured:

to predict a lifetime of the refrigeration cycle device based on the result of detecting the corrosion; and
to determine a quantity of a part to be ordered, the part being that of the refrigeration cycle device, based on the predicted lifetime.

With such a configuration, it becomes possible to predict the lifetime of the refrigeration cycle device and to determine an appropriate number of parts at an appropriate timing.

In a refrigeration cycle system according to a third aspect of the present disclosure, the processor in the processing device may create maintenance information for maintaining the refrigeration cycle devices, based on the result of detecting the corrosion.

With such a configuration, it becomes possible to provide maintenance information for maintaining the refrigeration cycle devices.

In a refrigeration cycle system according to a fourth aspect of the present disclosure, the processor in the processing device may transmit the maintenance information to a display device that displays the maintenance information, via a network.

With such a configuration, it becomes possible to display the maintenance information on the display device.

In a refrigeration cycle system according to a fifth aspect of the present disclosure,

each of the plurality of refrigeration cycle devices may further includes a position information acquiring unit that acquires position information of the refrigeration cycle device, and

each of the plurality of refrigeration cycle devices may cause the first communicator to transmit the position information via the network, and
the processing device may be configured:

to cause the second communicator to receive the position information via the network, and
to cause the processor to create a corrosion map indicating corrosion levels of the refrigerant pipes in the plurality of respective refrigeration cycle devices, based on the information related to the corrosion and the position information.

With such a configuration, it becomes possible to provide a corrosion map indicating corrosion levels of the refrigerant pipes in the plurality of refrigeration cycle devices.

In a refrigeration cycle system according to a sixth aspect of the present disclosure, the processing device may be configured:

to cause the second communicator to acquire environment information related to environments where the refrigeration cycle devices are located, based on the position information, and
to cause the processor to analyze the corrosion map based on the environment information.

With such a configuration, it becomes possible to analyze the corrosion map based on the environment information. As a result, for example, it becomes possible to analyze environmental factors of corrosions.

In a refrigeration cycle system according to a seventh aspect of the present disclosure, the processing device may be configured:

to cause the second communicator to acquire weather information related to weather in regions where the plurality of respective refrigeration cycle devices are located, and
to predict lifetimes of the refrigerant pipes due to the corrosions, based on the result of the corrosion detection and the weather information.

With this configuration, it becomes possible to predict the lifetime of the refrigerant pipe due to a corrosion, accurately.

In a refrigeration cycle system according to an eighth aspect of the present disclosure, the processor in the processing device may be configured:

to predict number of failing refrigeration cycle devices based on the lifetimes of the refrigerant pipes due to the corrosion; and
to estimate a demand for refrigeration cycle devices, based on the predicted number of failing refrigeration cycle devices.

With such a configuration, it becomes possible to estimate the demand for the refrigeration cycle devices.

In a refrigeration cycle system according to a ninth aspect of the present disclosure, the plurality of corrosion sensors may be disposed on

a refrigerant pipe installed outdoors,
a refrigerant pipe installed indoors, and
the processor in the processing device may be further configured to analyze:

a result of detecting the corrosion of the refrigerant pipe installed outdoors; and
a result of detecting the corrosion of the refrigerant pipe installed indoors.

With such a configuration, it becomes possible to analyze corrosions of indoor and outdoor refrigerant pipes.

In a refrigeration cycle system according to a tenth aspect of the present disclosure, the refrigerant pipe may contain copper as a main component,

the one or the plurality of corrosion sensors may be disposed on at least one of an outer surface of the refrigerant pipe and around the refrigerant pipe and are configured to measure corrosion currents, and
the processor in the processing device may be configured to detect a corrosion of the refrigerant pipe based on a change in the corrosion currents.

With such a configuration, it becomes possible to detect a corrosion of a refrigerant pipe containing copper as a main component.

In a refrigeration cycle system according to an eleventh aspect of the present disclosure, the refrigerant pipe may contain aluminum as a main component, and may include a sacrificial layer on an outer surface of the refrigerant pipe, the sacrificial layer being less noble than the main component of the refrigerant pipe, and the one or the plurality of corrosion sensors may be disposed on at least one of an outer surface of the refrigerant pipe and around the refrigerant pipe and configured to measure an electric resistance.

With such a configuration, it becomes possible to detect a corrosion of a refrigerant pipe containing aluminum as a main component.

An analysis method according to a twelfth aspect of the present disclosure is an analysis method for analyzing a plurality of refrigeration cycle devices based on a corrosion of a refrigerant pipe, the analysis method being executed by a computer and comprising:

acquiring information related to a corrosion of a refrigerant pipe, in each of the plurality of refrigeration cycle devices;
detecting a corrosion of the refrigerant pipe based on the information related to the corrosion; and
analyzing a result of detecting the corrosion.

With such a configuration, it becomes possible to detect corrosions of the plurality of refrigeration cycle devices, and to analyze the result of the corrosion detection.

In an analysis method according to a thirteenth aspect of the present disclosure, the analyzing may include:

predicting a lifetime of the refrigeration cycle device based on the result of detecting the corrosion; and
determining a quantity of a part to be ordered, the part being that of the refrigeration cycle device, based on the predicted lifetime.

With such a configuration, it becomes possible to predict the lifetime of the refrigeration cycle device and to determine an appropriate number of parts at an appropriate timing.

In an analysis method according to a fourteenth aspect of the present disclosure, the analyzing may include creating maintenance information for maintaining the refrigeration cycle device, based on the result of detecting the corrosion.

With such a configuration, it becomes possible to provide maintenance information for maintaining the refrigeration cycle devices.

An analysis method according to a fifteenth aspect of the present disclosure may further include transmitting the maintenance information to a display device.

With such a configuration, it becomes possible to display the maintenance information on the display device.

An analysis method according to a sixteenth aspect of the present disclosure may further include acquiring position information of each of the plurality of refrigeration cycle devices, wherein
the analyzing may include creating a corrosion map indicating degrees of corrosions of the refrigerant pipes in the plurality of refrigeration cycle devices, based on the information related to the corrosion and the position information.

With such a configuration, it becomes possible to provide a corrosion map indicating corrosion levels of the refrigerant pipes in the plurality of refrigeration cycle devices.

An analysis method according to a seventeenth aspect of the present disclosure may further include acquiring environment information related to environments where the refrigeration cycle devices are located, based on the position information, and
the analyzing may include causing the processor to analyze the corrosion map based on the environment information.

With such a configuration, it becomes possible to analyze the corrosion map based on the environment information. As a result, for example, it becomes possible to analyze environmental factors of corrosions.

An analysis method according to an eighteenth aspect of the present disclosure may further include acquiring weather information related to weather in regions where the plurality of respective refrigeration cycle devices are located, wherein

the analyzing may include predicting lifetimes of the refrigerant pipes due to the corrosions, based on the result of detecting the corrosion, and on the weather information.

With this configuration, it becomes possible to predict the lifetime of the refrigerant pipe due to a corrosion, accurately.

In the analysis method according to a nineteenth aspect of the present disclosure, the analyzing may include:

predicting number of failing refrigeration cycle devices based on the lifetimes of the refrigerant pipes due to the corrosion; and
estimating demands of refrigeration cycle devices, based on the predicted number of failing refrigeration cycle devices.

With such a configuration, it becomes possible to estimate the demand for the refrigeration cycle devices.

In an analysis method according to a twentieth aspect of the present disclosure, the acquiring may include:

acquiring information related to a corrosion of a refrigerant pipe installed outdoors; and
acquiring information related to a corrosion of a refrigerant pipe installed indoors, and
the analyzing may include:

analyzing a result of detecting the corrosion of the refrigerant pipe installed outdoors; and
analyzing a result of detecting the corrosion of the refrigerant pipe installed indoors.

With such a configuration, it becomes possible to analyze corrosions of indoor and outdoor refrigerant pipes.

Some embodiment of the present disclosure will now be explained with reference to the accompanying drawings. The following description is merely exemplary in nature, and is not intended to limit the present disclosure, and an application and use thereof. Furthermore, the drawings are schematic representations, and ratios between dimensions and the like do not necessarily coincide with the those in the reality.

(First embodiment)

A refrigeration cycle system according to a first embodiment of the present disclosure will now be explained. The refrigeration cycle system includes a plurality of refrigeration cycle devices and a processing device. In the following description, an air conditioner will be used as an example of the refrigeration cycle device, but the refrigeration cycle device is not limited to an air conditioner.

[Overall configuration]

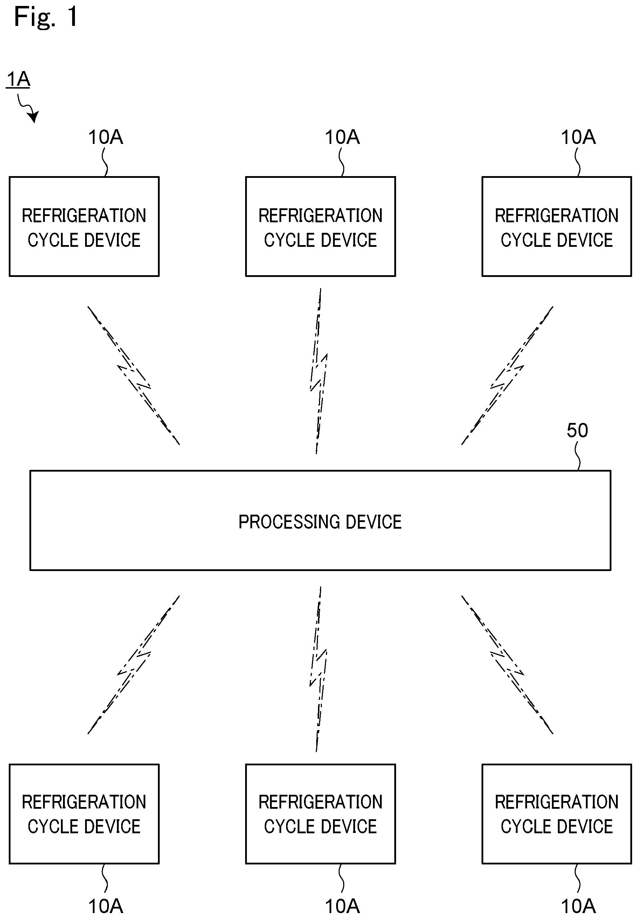

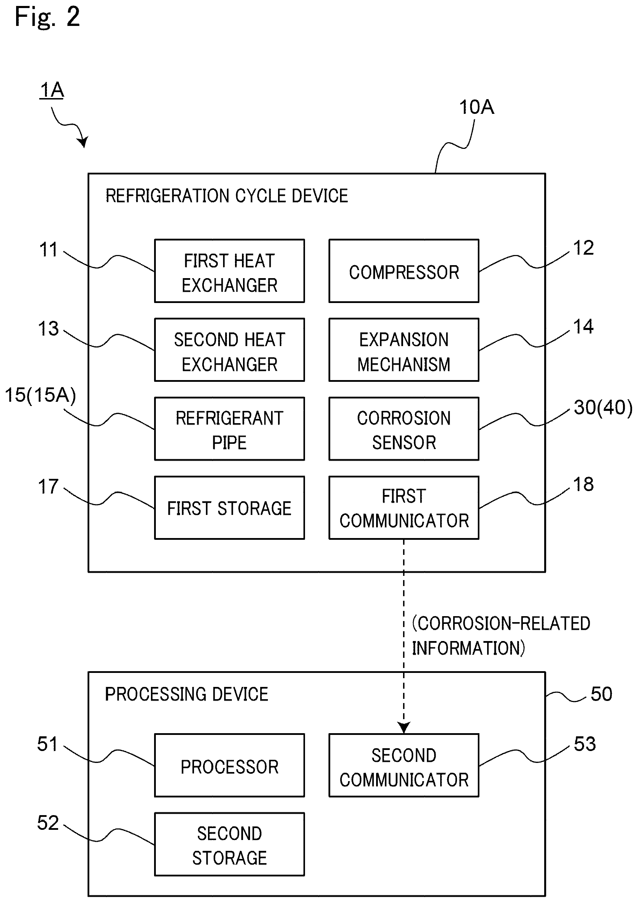

FIG. 1 is a schematic of an example of a refrigeration cycle system 1A according to a first embodiment of the present disclosure. FIG. 2 is a block diagram of an example of the refrigeration cycle system 1A according to the first embodiment of the present disclosure. In the example illustrated in FIG. 1, six refrigeration cycle devices 10A are illustrated, but the number of refrigeration cycle devices 10A is not limited thereto. In the example illustrated in FIG. 2, one of the refrigeration cycle device 10A and a processing device 50 are illustrated for the ease of explanation.

As illustrated in FIGS. 1 and 2, the refrigeration cycle system 1A includes the refrigeration cycle devices 10A and the processing device 50. In the refrigeration cycle system 1A, the refrigeration cycle devices 10A are configured to communicate with the processing device 50 via a network.

[Refrigeration cycle device]

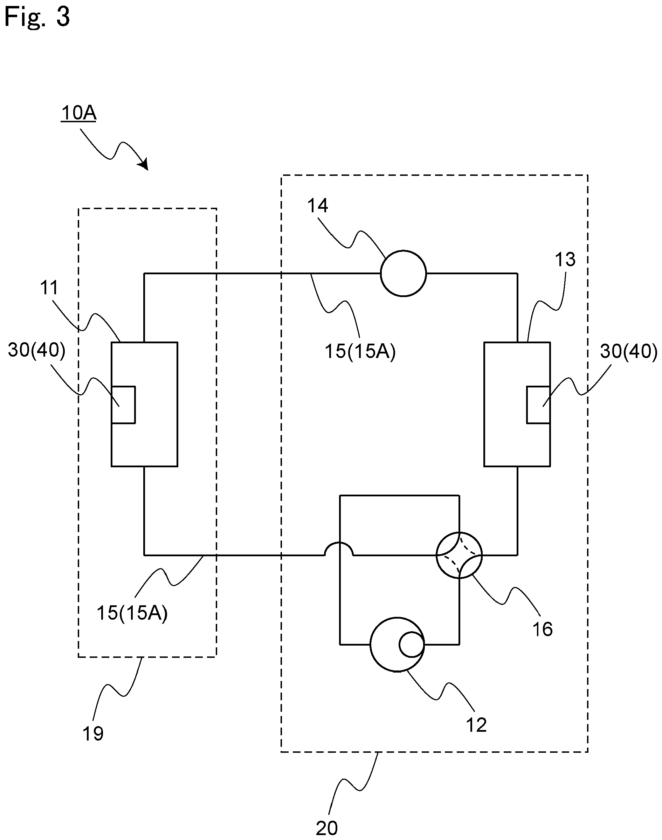

FIG. 3 is a schematic diagram of an example of the refrigeration cycle device 10A. As illustrated in FIGS. 2 and 3, the refrigeration cycle device 10A includes a first heat exchanger 11, a compressor 12, a second heat exchanger 13, an expansion mechanism 14, a refrigerant pipe 15, a four-way valve 16, a first storage 17, a first communicator 18, and a plurality of corrosion sensors 30.

The refrigeration cycle device 10A is, for example, an air conditioner. In the refrigeration cycle device 10A, the first heat exchanger 11 and a part of a refrigerant pipe 15 are included in an indoor unit 19, and are installed indoors. The compressor 12, the second heat exchanger 13, the expansion mechanism 14, the four-way valve 16, and a part of the refrigerant pipe 15 are included in an outdoor unit 20 and are installed outdoors.

<First heat exchanger>

The first heat exchanger 11 includes fins, the refrigerant pipe 15 disposed inside the first heat exchanger 11, and an indoor fan. The fins include a plurality of thin metal plates, and are disposed in such a manner that surfaces of the respective metal plates extend in parallel with one another. The fins are used in exchanging heat with the air. The refrigerant pipe 15 is disposed orthogonally to the surfaces of the fins, is disposed in a bent manner so as to penetrate through the fins repeatedly, and vaporizes the refrigerant flowing into the first heat exchanger 11. The indoor fan blows the air having its temperature adjusted by the first heat exchanger 11 to the indoor side.

<Compressor>

The compressor 12 is connected, by the refrigerant pipe 15, to the first heat exchanger 11, and to the four-way valve 16. The compressor 12 is used in compressing the refrigerant incoming from the refrigerant pipe 15 of the first heat exchanger 11.

<Second heat exchanger>

The second heat exchanger 13 includes fins, the refrigerant pipe 15 disposed inside the second heat exchanger 13, and an outdoor fan. The fins have the same structure as the fins included in the first heat exchanger 11. The refrigerant pipe 15 is disposed orthogonally to the surfaces of the fins, is disposed in a bent manner so as to penetrate through the fins repeatedly, and liquefies the refrigerant flowing into the second heat exchanger 13. The outdoor fan blows the air having its temperature adjusted by the second heat exchanger 13 to the outdoor side.

<Expansion mechanism>

The expansion mechanism 14 is connected, by the refrigerant pipe 15, to the first heat exchanger 11, and to the second heat exchanger 13. The expansion mechanism 14 is used in expanding the refrigerant incoming from the refrigerant pipe 15 in the second heat exchanger 13. The expansion mechanism 14 is an expansion valve, for example.

<Refrigerant pipe>

The refrigerant pipe 15 is disposed to connect the first heat exchanger 11, the compressor 12, the four-way valve 16, the second heat exchanger 13, and the expansion mechanism 14. The refrigerant pipe 15 makes up a part of the first heat exchanger 11 and the second heat exchanger 13. The refrigerant pipe 15 is disposed so as to connect the first heat exchanger 11, the compressor 12, the four-way valve 16, the second heat exchanger 13, and the expansion mechanism 14 in the order listed herein, for example.

The refrigerant pipe 15 has a channel through which a refrigerant flows, inside the refrigerant pipe 15, and allows the refrigerant to circulate. The refrigerant pipe 15 may have a hollow cylindrical shape, for example.

In the first embodiment, a main component of the refrigerant pipe 15 is copper. The material making up the refrigerant pipe 15 contains copper by 80 wt% or more. Preferably, the material making up the refrigerant pipe 15 contains copper by 95 wt% or more. More preferably, the material making up the refrigerant pipe 15 contains copper by 99 wt% or more. The material making up the refrigerant pipe 15 may contain phosphorus by 0.015 wt% or more and 0.40 wt% or less. Examples of the material of which the refrigerant pipe 15 is made include oxygen-free copper C1020, phosphorus-deoxidized copper C1220, and high-phosphorus-deoxidized copper C1260. Furthermore, using the amount of phosphorus added to the copper of the refrigerant pipe 15, it is possible to improve the corrosion resistance. For example, by using high phosphorus deoxidized copper C1260 as a material for forming the refrigerant pipe 15, the resistance against dovetail corrosions, which result in cavitation of the refrigerant pipe 15, is improved.

<Four-way valve>

The four-way valve 16 is connected, by the refrigerant pipe 15, to the compressor 12, to the first heat exchanger 11, and to the second heat exchanger 13. During the cooling operation, the four-way valve 16 sends the refrigerant coming out of the compressor 12 to the second heat exchanger 13. At the same time, the four-way valve 16 changes the direction in which the refrigerant flows, depending on the operation mode (cooling operation, heating operation) of the refrigeration cycle device 10A.

<Corrosion Sensor>

The corrosion sensor 30 acquires information related to a corrosion of the refrigerant pipe 15. In the first embodiment, the corrosion sensor 30 is an atmospheric corrosion monitor (ACM) sensor that replicates a corrosion of the refrigerant pipe 15, and detects a corrosion current resultant of the replicated corrosion. In other words, the corrosion sensor 30 detects a corrosion current as information related to the corrosion of the refrigerant pipe 15.

The corrosion sensor 30 replicates a corrosion of the refrigerant pipe 15, and detects a corrosion current resultant of the replicated corrosion. The corrosion sensor 30 may quantitatively measure the corrosion current on the ongoing basis, from when the use of the refrigeration cycle device 10A is started. For example, the corrosion sensor 30 measures the corrosion current at an interval of 0.1 seconds.

The corrosion sensor 30 is disposed on the outer surface of the refrigerant pipe 15. In the first embodiment, the refrigeration cycle device 10A includes two corrosion sensors 30. The first corrosion sensor 30 is disposed indoors. The second corrosion sensor 30 is installed outdoors. Specifically, the first corrosion sensor 30 is disposed on the outer surface of the refrigerant pipe 15 of the first heat exchanger 11. The second corrosion sensor 30 is disposed on the outer surface of the refrigerant pipe 15 of the second heat exchanger 13.

The corrosion sensor 30 is attached to the refrigerant pipe 15 in order to match the corrosion environment of the corrosion sensor 30 to that of the refrigerant pipe 15. In other words, the corrosion sensor 30 is attached to a part of the refrigerant pipe 15 where corrosion is to be detected. To attach the corrosion sensor 30 to the refrigerant pipe 15, the corrosion sensor 30 may be deformed to fit the shape of the outer surface of the refrigerant pipe 15. In other words, the corrosion sensor 30 may be flexible. For example, the corrosion sensor 30 may be attached to the refrigerant pipe 15 using an adhesive layer provided on the rear surface of the corrosion sensor 30, using an adhesive, by brazing, soldering, or spot welding. The corrosion sensor 30 may also be attached to the refrigerant pipe 15 by inserting the corrosion sensor 30 into a case attached to the refrigerant pipe 15.

The dimensions of the corrosion sensor 30 may be designed based on the place where and the method by which the corrosion sensor 30 is installed.

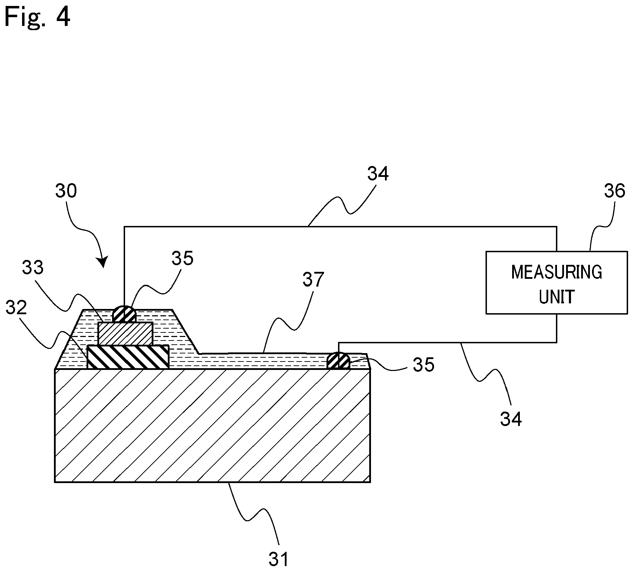

FIG. 4 is a schematic diagram illustrating an example of the corrosion sensor 30. As illustrated in FIG. 4, the corrosion sensor 30 includes a base material 31, an insulating layer 32, a cathode electrode 33, a conductive wire 34, an insulating protection layer 35, and a measuring unit 36.

The base material 31 is made of a conductive material. For example, the base material 31 is made of the same material as the material of which the refrigerant pipe 15 is made. In the first embodiment, the base material 31 contains copper as a main component, in the same manner as the refrigerant pipe 15. Therefore, it is possible to replicate the corrosion of the refrigerant pipe 15 using the base material 31. As a result, the corrosion of the refrigerant pipe 15 can be determined accurately, based on the corrosion of the base material 31 included in the corrosion sensor 30.

The base material 31 has a plate-like shape. By making the base material 31 thin, it becomes possible to deform the corrosion sensor 30 easily so that the shape of the corrosion sensor 30 is matched to the shape of where the corrosion sensor 30 is disposed. The thickness of the base material 31 may be substantially the same as that of the refrigerant pipe 15. For example, the thickness of the base material 31 is 0.8 times or more and 1.2 times or less the thickness of the refrigerant pipe 15. Preferably, the thickness of the base material 31 is 0.9 times or more and 1.1 times or less than that of the refrigerant pipe 15.

The insulating layer 32 has a plate-like shape. The insulating layer 32 is laminated on one surface of the base material 31. Even after the insulating layer 32 is laminated, the base material 31 remains exposed from the surface.

The insulating layer 32 is an electrically insulating material. An example of the material for forming the insulating layer 32 is a resin.

The cathode electrode 33 is laminated on a surface of the insulating layer 32, the surface being on the opposite side of the base material 31.

The cathode electrode 33 is made of a conductive material having a surface potential nobler than that of the base material 31. When the surface potential of the cathode electrode 33 is nobler than that of the base material 31, the base material 31 becomes preferentially corroded. Therefore, the corrosion of the refrigerant pipe 15 can be detected using the corrosion sensor 30. The cathode electrode 33 is made of silver or carbon, for example, that has a surface potential nobler than that of copper of the base material 31.

The corrosion sensor 30 includes conductive wires 34 between the base material 31 and the measuring unit 36, and between the cathode electrode 33 and the measuring unit 36, respectively, and the conductive wires 34 electrically connect therebetween. The conductive wires 34 are made of an electrically conductive material. For example, the conductive wires 34 are made of copper.

The insulating protection layers 35 are disposed at connections between the conductive wire 34 and the base material 31, and between the conductive wire 34 and the cathode electrode 33, respectively, to protect the connections. The insulating protection layer 35 is made of an electrically insulating material. The insulating protection layer 35 is made of a resin, for example.

The measuring unit 36 measures a corrosion current flowing between the base material 31 and the cathode electrode 33. The measuring unit 36 is connected to the base material 31 and the cathode electrode 33 via the conductive wire 34, and the measuring unit 36 measures the corrosion current flowing through the conductive wire 34. The measuring unit 36 transmits information of the measured corrosion current to the first storage 17. The corrosion current information is stored in the first storage 17.

An operation of the corrosion sensor 30 will now be explained.

On the surface of the corrosion sensor 30, a water film 37 is formed. The water film 37 is a continuous film of water, and is in contact with a part of the base material 31 and a part of the cathode electrode 33. On the corrosion sensor 30, a plurality pieces of water film 37 may be formed. The water film 37 is formed, for example, when the temperature of the base material 31 is lower than the ambient temperature, and moisture condenses. A water film 37 is also formed when the humidity around the base material 31 is high.

Because water is electrically conductive, when the water film 37 is formed, the base material 31 becomes electrically connected to the cathode electrode 33. Because a potential difference is formed between the base material 31 and the cathode electrode 33, a corrosion current flows therebetween. The corrosion current flows from the base material 31 to the cathode electrode 33, and electrons move from the cathode electrode 33 to the base material 31. The corrosion current then flows from the cathode electrode 33 through the conductive wire 34 to the measuring unit 36. The measuring unit 36 measures the corrosion current, and transmits the information of the measured corrosion current to the first storage 17.

<First storage>

The first storage 17 stores therein the information related to the corrosion, the information having been acquired by the corrosion sensor 30. In the first embodiment, the first storage 17 stores therein the corrosion current information detected by the corrosion sensor 30. The first storage 17 may be, for example, a RAM, a ROM, an EEPROM, a flash memory or other memory technology, an HDD, a CD-ROM, a DVD or other optical disc storage, a magnetic cassette, a magnetic tape, a magnetic disk storage or any other magnetic storage device.

<First communicator>

The first communicator 18 transmits the information related to the corrosion, the information being stored in the first storage 17, via the network. In the first embodiment, the first communicator 18 transmits the information of the corrosion current stored in the first storage 17 via the network. The first communicator 18 includes a circuit that transmit information to the processing device 50 in accordance with a predetermined communication protocol (e.g., LAN, Wi-Fi (registered trademark)) .

Although not illustrated, the refrigeration cycle device 10A includes a controller that controls the above-described components. The controller may include, for example, a memory (not illustrated) storing therein a program for causing the elements to function, and a processing circuit (not illustrated) corresponding to a processor, such as a central processing unit (CPU). The processor may implement the function of these elements by executing a program.

[Processing device]

The processing device 50 communicates with the refrigeration cycle devices 10A via the network. The processing device 50 is a computer. The processing device 50 is a server or a cloud, for example. As illustrated in FIG. 2, the processing device 50 includes a processor 51, a second storage 52, and a second communicator 53.

<Processor>

The processor 51 is a processing circuit such as a central processing unit (CPU). The processor 51 executes the program stored in the second storage 52. Specifically, the processor 51 detects a corrosion of the refrigerant pipe 15 based on the information related to the corrosion, and analyzes a result of detecting the corrosion.

<Second storage>

The second storage 52 stores therein the program executed by the processor 51. The second storage 52 also stores therein information received by the second communicator 53. In the first embodiment, the second storage 52 stores the information related to the corrosion transmitted from the refrigeration cycle devices 10A. The second storage 52 may be, for example, a RAM, a ROM, an EEPROM, a flash memory or other memory technology, an HDD, a CD-ROM, a DVD or other optical disc storage, a magnetic cassette, a magnetic tape, a magnetic disk storage or any other magnetic storage device.

<Second communicator>

The second communicator 53 receives the corrosion-related information via the network. In the first embodiment, the second communicator 53 receives the corrosion current information transmitted from the first communicator 18 via the network. The second communicator 53 includes a circuit that receives information from the first communicators 18 in the respective refrigeration cycle devices 10A, in accordance with a predetermined communication protocol (e.g., LAN, Wi-Fi (registered trademark)).

[Example of corrosion detection]

An example of a corrosion detection using the corrosion sensor 30 will now be explained. Specifically, explained herein is an example in which a corrosion of the refrigerant pipe 15 containing copper as a main component is detected based on a change in the corrosion current measured by the corrosion sensor 30.

To begin with, local corrosions of copper that is used as the material of the base material 31 of the corrosion sensor 30 and of the refrigerant pipe 15 will be explained. Examples of a local corrosion of copper include a dovetail corrosion and stress corrosion cracking. In a dovetail corrosion, intricately branched microcavities are formed inside the copper of a wall of the refrigerant pipe 15, for example. A dovetail corrosion is likely to occur when carboxylic acid is present near the copper. For example, carboxylic acid is generated when formaldehyde contained in an adhesive used as a material of a building becomes oxidized. In a stress cracking corrosion, cracking begins from a copper surface, e.g., from the outer surface of the refrigerant pipe 15. Stress cracking corrosion occurs when ammonia is present near the copper being subjected to a bending stress. Ammonia is generated from urine of a pet, for example.

When a normal corrosion due to humidity or salt damage occurs in the base material 31 that contains copper as a main component, the copper forming the base material 31 becomes oxidized and emits electrons. As a result of the corrosion of the base material 31, the corrosion current flowing through the base material 31 increases. When the base material 31 containing copper as a main component becomes locally corroded, by contrast, the copper forming the base material 31 becomes oxidized and emits a large amount of electrons within a short time period. As a result of the local corrosion of the base material 31, the corrosion current flowing through the base material 31 increases. Such an increase in the corrosion current due to a local corrosion is a more abrupt increase, compared with a normal corrosion caused by humidity or salt damage, and forms a spike signal. Therefore, when a local corrosion occurs, the corrosion sensor 30 detects a spike signal in the corrosion current. In other words, a spike signal indicates that a local corrosion of copper has occurred, and can be used in detecting corrosion of copper.

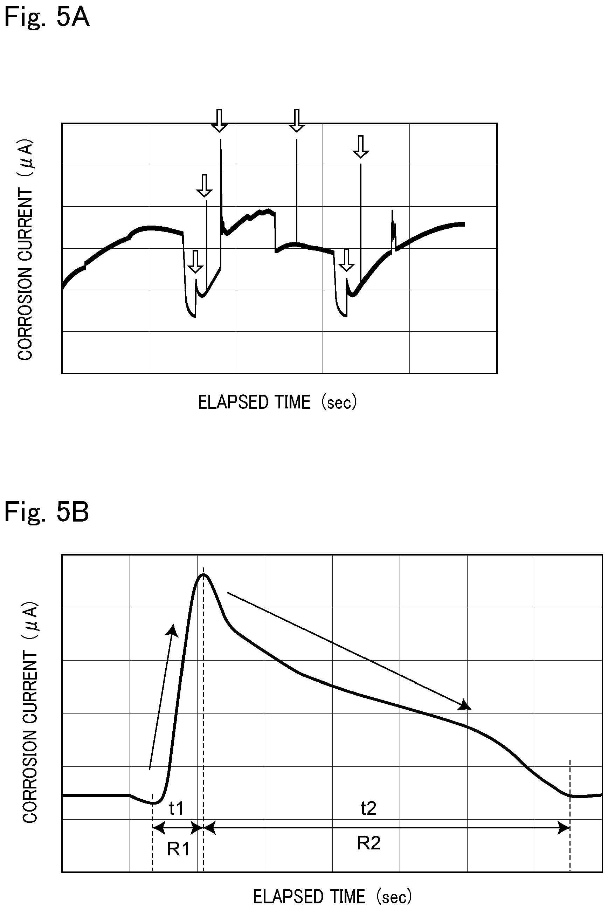

FIG. 5A is a graph illustrating a relationship between the corrosion current detected by the corrosion sensor 30 in FIG. 4 and the elapsed time. FIG. 5B is an enlarged view of a part of the corrosion current indicated in FIG. 5A. In FIG. 5A, an arrow points to a spike signal indicating an occurrence of the corrosion of the base material 31 containing copper as a main component. FIG 5B illustrates an enlarged view of one of the spike signals indicated in FIG 5A.

As illustrated in FIGS. 5A and 5B, the spike signal is an abrupt change in the corrosion current. A spike signal includes a rise interval R1 and a fall interval R2. The rise interval R1 is an interval in which the time derivative of the corrosion current rises at a certain threshold or higher. On the other hand, the fall interval R2 is an interval that occurs immediately subsequently to the rise interval R1, and in which the corrosion current falls. Because the current falls, the time derivative of the fall interval R2 becomes less than 0 pA/s, that is, negative. When the rise interval R1, in which a time derivative is equal to the threshold or higher, continues for time t1, and the fall interval R2, in which the corrosion current falls, continues for time t2, the processor 51 determines that the corrosion current includes a spike signal, and determine the corrosion of the refrigerant pipe 15. For example, the time t1 is set shorter than 1 second, and the time t2 is set to 1 second or longer and shorter than 30 seconds. The threshold of the time derivative of the rise interval R1 is 5 pA/s, for example.

For example, the processor 51 in the processing device 50 determines that corrosion has occurred when a spike signal is generated, and determined that there is no corrosion when no spike signal is generated. The processor 51 may determine the conditions of the corrosion, e.g., the size of the corroded area, the rate of the corrosion, and the lifetime of the refrigerant pipe 15 based on other information related to the spike signals detected by the corrosion sensor 30. For example, the processor 51 may determine the conditions of the corrosion using the maximum current, and the number and the frequency by which the spike signal has appeared.

As described above, as an example of a method for detecting a corrosion of the refrigerant pipe 15 using the corrosion sensor 30, a corrosion can be detected based on a change in the corrosion current.

Explained in the first embodiment is an example in which the corrosion sensor 30 is an ACM sensor, but an embodiment is not limited thereto. The corrosion sensor 30 may be any sensor capable of detecting a corrosion of the refrigerant pipe 15. For example, the corrosion sensor 30 may be changed according to the material of which the refrigerant pipe 15 is made.

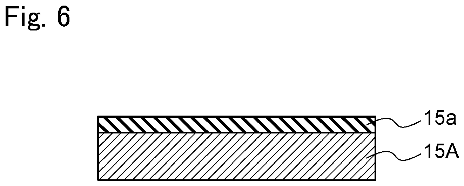

FIG. 6 is a schematic view illustrating a refrigerant pipe 15A according to another example. The refrigerant pipe 15A illustrated in FIG. 6 contains aluminum as a main component. Specifically, the refrigerant pipe 15A is made of an aluminum alloy that contains aluminum as a main component. The material making up the refrigerant pipe 15A contains 80 wt% or more aluminum. Preferably, the material making up the refrigerant pipe 15A contains aluminum by 90 wt% or more. More preferably, the material making up the refrigerant pipe 15A contains aluminum by 95 wt% or more. The material making up the refrigerant pipe 15A may contain at least one of silicon, iron, manganese, and magnesium as an additive. Examples of the material making up the refrigerant pipe 15A include 1000, 3000, and 5000 series aluminum alloys. In the first embodiment, the refrigerant pipe 15A is made of 3003 aluminum alloy.

A sacrificial layer 15a is provided on an outer surface of the refrigerant pipe 15A. The sacrificial layer 15a may be partially provided on the outer surface of the refrigerant pipe 15A. For example, the sacrificial layer 15a may be provided by applying thermal spraying onto the refrigerant pipe 15A. The sacrificial layer 15a may be bonded in such a manner that the outer surface of the refrigerant pipe 15A is covered thereby. For example, the sacrificial layer 15a may be provided as a clad on the refrigerant pipe 15A.

The sacrificial layer 15a is made of a material having a surface potential lower than that of aluminum. The sacrificial layer 15a may be an alloy layer having a surface potential lower than that of aluminum. For example, the sacrificial layer 15a is an aluminum-zinc alloy layer having a zinc concentration of 1 wt% or more and 15 wt% or less. When the sacrificial layer 15a is an aluminum-zinc alloy layer, the zinc concentration may change in the depth direction of the sacrificial layer 15a. In the first embodiment, the sacrificial layer 15a is made from a layer of an aluminum - 2 wt% zinc alloy.

The thickness of the sacrificial layer 15a may be designed based on the environment where the refrigerant pipe 15A is used.

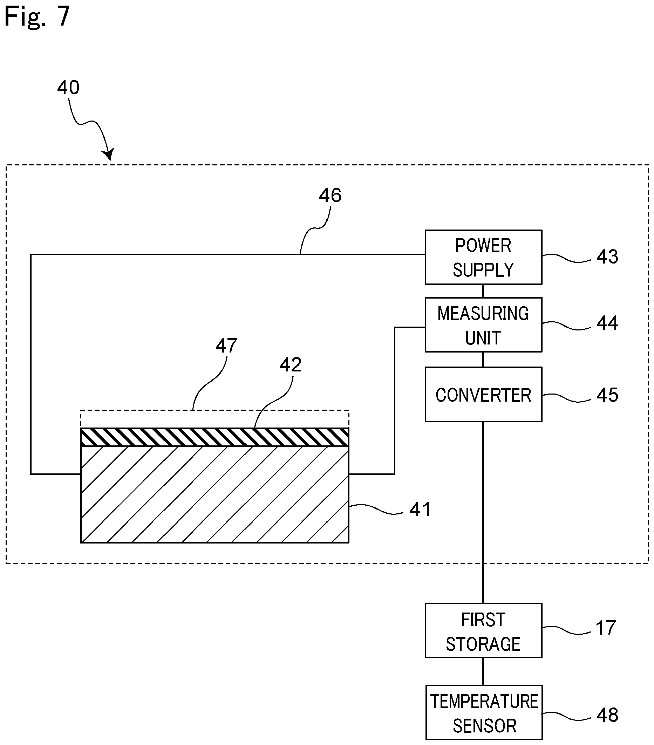

FIG. 7 is a schematic illustrating a corrosion sensor 40 according to another example. The corrosion sensor 40 illustrated in FIG. 7 is used in a manner attached to the refrigerant pipe 15A. The corrosion sensor 40 replicates the corrosion of the refrigerant pipe 15A, and measures a change in the electric resistance of the corrosion sensor 40, the change being caused by the corrosion. In other words, the corrosion sensor 40 acquires information of the electric resistance, as information related to the corrosion. The corrosion sensor 40 may quantitatively measure the electric resistance on the ongoing basis, from when the use of the refrigeration cycle device 10A is started. For example, the corrosion sensor 40 measures the electric resistance once in every hour.

The corrosion sensor 40 is disposed around the refrigerant pipe 15A. Being "disposed around the refrigerant pipe 15A" means that the corrosion sensor 40 is disposed on the refrigerant pipe 15A indirectly with another part interposed therebetween. When there is no moisture condensation on the refrigerant pipe 15A, the corrosion sensor 40 may be disposed at a position around the refrigerant pipe 15A where the refrigerant temperature is the lowest. When there are high humidity and moisture condensation on the refrigerant pipe 15A, by contrast, the corrosion sensor 40 may be disposed at a position where water is likely to accumulate.

The corrosion sensor 40 may be fixed to the fins of the first heat exchanger 11 and the second heat exchanger 13. The corrosion sensor 11 is fixed to the fins 21 by using by a clip, a cable tie, welding, or an adhesive, for example. It is also possible to install the corrosion sensor 40 around the refrigerant pipe 15A by attaching a case to the fins and inserting the corrosion sensor 40 thereinto.

The dimensions of the corrosion sensor 40 may be designed based on the place where and the method by which corrosion sensor 40 is installed.

As illustrated in FIG. 7, the corrosion sensor 40 includes a base material 41, a base material sacrificial layer 42, a power supply 43, a measuring unit 44, a converter 45, and a conductive wire 46.

The main component of the base material 41 is the same as that of the refrigerant pipe 15A. For example, the base material 41 is made of the same material as the material of the refrigerant pipe 15A. In the first embodiment, the main component of the base material 41 is aluminum.

The base material 41 has a plate-like shape. The thickness of the base material 41 may be substantially the same as that of the refrigerant pipe 15A. For example, the thickness of the base material 41 is 0.8 times or more and 1.2 times or less the thickness of the refrigerant pipe 15A. Preferably, the thickness of the base material 41 is 0.9 times or more and 1.1 times or less than that of the refrigerant pipe 15A.

The base material sacrificial layer 42 is laminated on one surface of the base material 41. It is also possible for the base material 41 to be exposed, even after the lamination of the base material sacrificial layer 42.

The base material sacrificial layer 42 is made of a material having a surface potential lower than that of the base material 41. Because the surface potential of the base material sacrificial layer 42 is less noble than that of the base material 41, the base material sacrificial layer 42 corrodes preferentially. When the base material sacrificial layer 42 corrodes, the base material sacrificial layer 42 becomes thinner, and a corroded portion 47 is formed in the base material sacrificial layer 42. The corroded portion 47 is a portion having the thickness reduced by the corrosion. The main component of the base material sacrificial layer 42 is the same as that of the sacrificial layer 15a of the refrigerant pipe 15A. For example, the base material sacrificial layer 42 is made of the same material as that of the sacrificial layer 15a. Therefore, with the base material sacrificial layer 42, it is possible to replicate the corrosion of the sacrificial layer 15a of the refrigerant pipe 15A. As a result, it is possible to estimate the lifetime of the refrigerant pipe 15A accurately, based on the corrosion of the base material sacrificial layer 42 included in the corrosion sensor 40. In the first embodiment, the base material sacrificial layer 42 is made from a layer of an aluminum - 2 wt% zinc alloy.

The base material sacrificial layer 42 has a plate-like shape. The thickness of the base material sacrificial layer 42 may be substantially the same as that of the sacrificial layer 15a of the refrigerant pipe 15A. For example, the thickness of the base material sacrificial layer 42 is 0.8 times or more and 1.2 times or less the thickness of the sacrificial layer 15a. Preferably, the thickness of the base material sacrificial layer 42 is 0.9 times or more and 1.1 times or less the thickness of the sacrificial layer 15a. It is also possible for the base material sacrificial layer 42 to have a thickness smaller than that of the sacrificial layer 15a. When the thickness of the base material sacrificial layer 42 is smaller than that of the sacrificial layer 15a, the base material sacrificial layer 42 is used up before the sacrificial layer 15a. Therefore, when the lifetime of the refrigerant pipe 15A is estimated based on the removal of the base material sacrificial layer 42, it is possible to estimate the lifetime of the refrigerant pipe 15A on the safer side. Estimating the lifetime of the refrigerant pipe 15A on the safer side means to assume that the end of the lifetime of the refrigerant pipe 15A has arrived even before the refrigerant pipe 15A becomes penetrated. By estimating the lifetime of the refrigerant pipe 15A on the safer side, it is possible to deal with the corrosion of the refrigerant pipe 15A more reliably, before the refrigerant pipe 15A becomes penetrated. Penetration of the refrigerant pipe 15A means formation of a hole in the refrigerant pipe 15A resultant of a corrosion.

The power supply 43 generates a constant current flow in the base material 41 and the base material sacrificial layer 42. For example, the power supply 43 generates a current flow at 10 mA, for example.

The measuring unit 44 measures the voltage applied to the base material 41 and the base material sacrificial layer 42. The measuring unit 44 may measure the voltage intermittently. For example, the measuring unit 44 measures the voltage once in every hour. As the measurement method, any measurement method that can measure minute resistances of metal material may be used. For example, four-terminal sensing may be used.

The converter 45 converts the voltage measured by the measuring unit 44 into an electric resistance. Specifically, the converter 45 converts the voltage measured by the measuring unit 44 into the electric resistance of the base material 41 and the base material sacrificial layer 42, by dividing the voltage by the current generated by the power supply 43. The information of the electric resistance resultant of the conversion by the converter 45 is transmitted to the first storage 17. The first storage 17 stores therein information of the electric resistance as the corrosion-related information.

The conductive wire 46 is disposed between the power supply 43, the measuring unit 44, the converter 45, and the temperature sensor 48, all of which are, in turn, electrically connected by the conductive wire 46. The conductive wire 46 is made of an electrically conductive material. For example, the conductive wire 46 is made of copper.

<Temperature sensor>

The temperature sensor 48 measures a temperature around the corrosion sensor 40. Because electric resistance has temperature dependency, it is possible to improve the measurement accuracy of the electric resistance by correcting the electric resistance with respect to the temperature. The temperature sensor 48 may measure the temperature intermittently. For example, the temperature sensor 48 makes the measurement at a measurement interval synchronized with that of the measuring unit 44. The temperature information acquired by the temperature sensor 48 is transmitted to the first storage 17. The first storage 17 stores therein the temperature information. Note that the temperature sensor 48 is not an essential component.

[Another example of corrosion detection]

As another example of the corrosion detection, a corrosion detection using the corrosion sensor 40 will now be explained. Specifically, an example of detecting corrosion of the refrigerant pipe 15A containing aluminum as a main component based on a change in the electric resistance measured by the corrosion sensor 40 will be explained.

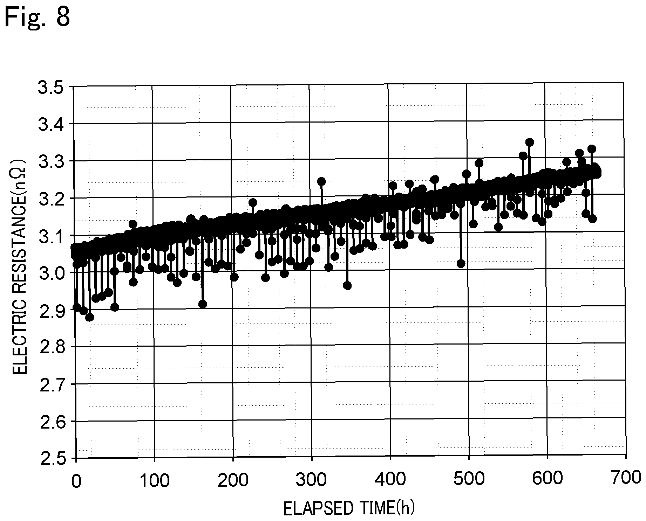

FIG. 8 is a graph illustrating a relationship between the electric resistance detected by the corrosion sensor 40 and the time elapsed. The vertical axis represents the electrical resistance, and the horizontal axis represents the time elapsed.

As illustrated in FIG. 8, the electric resistance increases as the time elapses more. As the time elapses further, the corrosion of the base material sacrificial layer 42 proceeds and the electric resistance increases. The processor 51 estimates the corrosion levels of the refrigerant pipe 15A based on the electric resistance measured by the corrosion sensor 40. Specifically, the processor 51 calculates a first sectional area A1 of a cross section including the base material 41 and the base material sacrificial layer 42, and estimates the corrosion levels of the refrigerant pipe 15A based on a decreasing tendency of the first sectional area A1, caused by the corrosion. In this manner, it is possible to estimate the lifetime of the refrigerant pipe 15A.

It is known that the electric resistance R can be expressed using following Equation (1) including the electrical resistivity p, the length 1 of the base material sacrificial layer 42, and the first sectional area A1.
[Math 1]

$$R = \frac{\rho l}{A1} \cdot \cdot \cdot \quad (1)$$

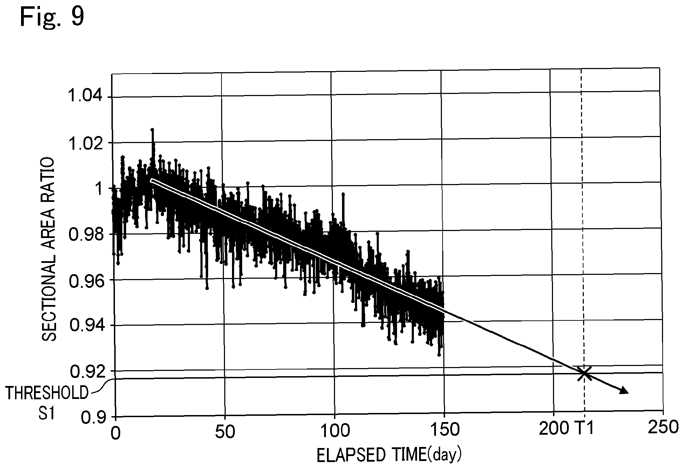

FIG. 9 illustrates a relationship between the sectional area ratio (A1/A0) calculated from the electric resistance measured by the corrosion sensor 40 and the time elapsed. In the measurement in FIG. 9, the refrigeration cycle device 10A including the second heat exchanger 13 containing aluminum as a main component was installed in an ordinary house in Okinawa Prefecture, Japan, and the cooling operation was performed continuously at a room temperature setting of 26 °C. Meanwhile, the corrosion sensor 40 installed in the second heat exchanger 13 was applied with a direct current of 10 mA, and the electric resistance was measured at an interval of one hour. The sectional area ratio (A1/A0) was calculated by calculating the ratio between the first sectional area A1 of the cross section including base material 41 and the base material sacrificial layer 42, and the second sectional area A0 of a cross section including the base material 41 and the base material sacrificial layer 42 before the use of the refrigerant pipe 15A.

In the refrigerant pipe 15A used in the measurement in FIG. 9, the thickness of the base material 41 was 174 um, and the thickness of the base material sacrificial layer 42 was 16 um. The base material 41 and the base material sacrificial layer 42 had the same width. The threshold S1 was defined as a ratio of the thickness of the base material 41 with respect to the total thickness of the base material 41 and the base material sacrificial layer 42. In the example illustrated in FIG. 9, the substantial lifetime of the refrigerant pipe 15A is estimated using the threshold S1. The substantial lifetime means a limit up to which the refrigerant pipe 15A can be used, before the refrigerant pipe 15A becomes penetrated due to a corrosion. In FIG. 9, the threshold S1 is set near 0.92. The point in time T1 at which the cross-sectional area ratio (A1/A0) drops near 0.92 corresponds to a point in time at which the base material sacrificial layer 42 is removed.

As indicated in FIG. 9, based on the information of the sectional area ratio (A1/A0) up to the 150th days from the 0th day from when the measurement was started, an approximation formula of the sectional area ratio (A1/A0) was calculated using the least squares method, and the time T1 required for the sectional area ratio (A1/A0) to drop to a level equal to the threshold S1 or lower was predicted. In FIG. 9, it was predicted that the threshold S1 is reached on the 215th day.

Explained herein is an example in which the threshold S1 corresponds to the sectional area ratio (A1/A0) that is the ratio of the first sectional area A1 with respect to the second sectional area A0 is near 0.92, but an embodiment is not limited thereto. The threshold S1 may be lower or higher than the sectional area ratio (A1/A0)=0.92.

As described above, as an example of a method of detecting a corrosion of the refrigerant pipe 15A using the corrosion sensor 40, the corrosion can be detected based on a change in the electric resistance.

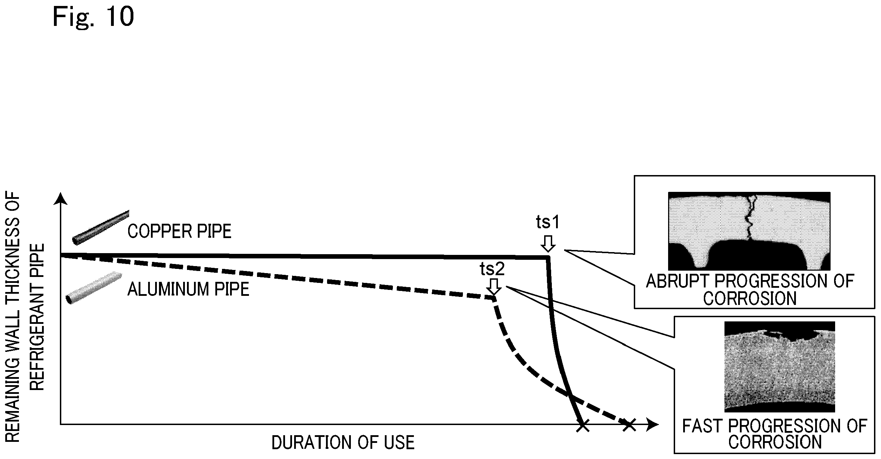

FIG. 10 is a schematic diagram for explaining an example of prediction of a lifetime of the refrigerant pipe 15, 15A. As illustrated in FIG. 10, it is possible to detect the corrosion of the refrigerant pipe 15, 15A and to predict the lifetime of the refrigerant pipe 15, 15A based on the information related to the corrosion acquired by the corrosion sensor 30, 40.

In the refrigerant pipe 15 containing copper as a main component, corrosion can be detected based on a change in the corrosion current acquired by the corrosion sensor 30. For example, as illustrated in FIG. 10, the processor 51 can determine that the refrigerant pipe 15 have reached its limit of use at timing ts1 at which the corrosion sensor 30 acquires a spike signal. A spike signal occurs when a corrosion progresses quickly due to a local corrosion. Therefore, it is possible to predict the lifetime of the refrigerant pipe 15 based on the timing ts1 at which the corrosion sensor 30 acquires the spike signal.

In the refrigerant pipe 15A containing aluminum as a main component, a corrosion can be detected based on a change in the electric resistance acquired by the corrosion sensor 40. For example, the processor 51 can calculate the first sectional area A1 of the cross section including the base material 41 and the base material sacrificial layer 42 based on the electric resistance acquired by the corrosion sensor 40, and determine the degree by which the refrigerant pipe 15A is corroded, based on a decreasing tendency of the first sectional area A1. For example, as illustrated in FIG. 10, it can be determined that the refrigerant pipe 15 has reached the limit of use at the timing ts2 at which the base material sacrificial layer 42 in the corrosion sensor 40 is removed. Therefore, it is possible to predict the lifetime of the refrigerant pipe 15A based on the timing ts2.

In the manner described above, it is possible to detect the corrosion of the refrigerant pipe 15, 15A based on the information related to the corrosion acquired by the corrosion sensor 30, 40. Furthermore, it is possible to predict the lifetime of the refrigerant pipe 15, 15A based on the result of the corrosion detection.

In the refrigeration cycle system 1A, the processing device 50 acquires the information related to corrosions of the plurality of refrigeration cycle devices 10A via a network, and detects a corrosion of the refrigerant pipe 15, 15A based on the information related to the corrosion. The processing device 50 also analyzes the result of a corrosion detection result, and uses the analysis result to provide various services.

[Operation]

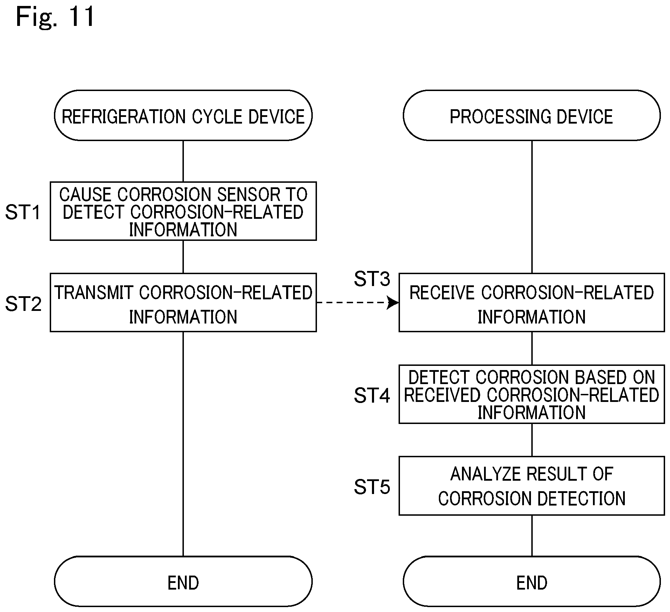

An example of an operation (analysis method) of refrigeration cycle system 1A will now be explained with reference to FIG. 11. FIG. 11 is a flowchart illustrating an example of an operation of the refrigeration cycle system 1A according to the first embodiment of the present disclosure. In FIG. 11, an example using the corrosion sensor 30 will be explained.

As illustrated in FIG. 11, in Step ST1, the corrosion sensor 30 in the refrigeration cycle device 10A acquires corrosion-related information. Specifically, in Step ST1, the corrosion sensor 30 acquires information of a corrosion current. The acquired corrosion current information is stored in the first storage 17.

In Step ST2, the first communicator 18 in the refrigeration cycle device 10A transmits the information related to the corrosion. Specifically, in Step ST2, the first communicator 18 transmits the corrosion current information stored in the first storage 17 to the processing device 50 via the network.

In Step ST3, the second communicator 53 in the processing device 50 receives the information related to the corrosion. Specifically, in Step ST3, the second communicator 53 receives the information of the corrosion current transmitted from the first communicator 18 via the network. The received corrosion current information is stored in the second storage 52.

In Step ST4, the processor 51 in the processing device 50 detects a corrosion based on the corrosion-related information. Specifically, in Step ST4, the processor 51 determines whether there is a spike signal, based on the corrosion current information stored in the second storage 52. The processor 51 determines that there is corrosion when there is a spike signal, and determines that there is no corrosion when there is no spike signal. In this manner, the processor 51 detects a corrosion of the refrigerant pipe 15 based on spike signals.

In Step ST5, the processor 51 in the processing device 50 analyzes the result of the corrosion detection.

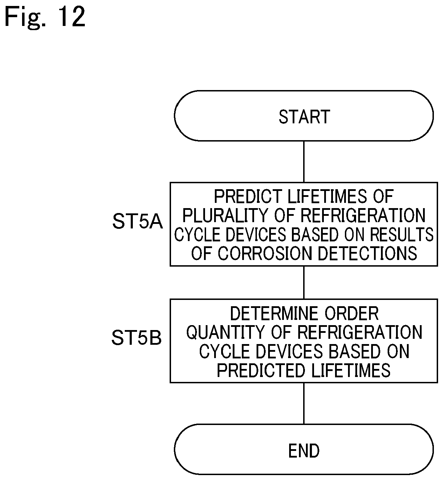

FIG. 12 illustrates a flowchart of an example of the analyzing step ST5. As illustrated in FIG. 12, Step ST5 includes steps ST5A and ST5B.

In Step ST5A, the processor 51 in the processing device 50 predicts the lifetimes of the plurality of respective refrigeration cycle devices 10A based on a result of the corrosion detection. Specifically, the processor 51 predicts the lifetimes of the refrigerant pipes 15 in the plurality of respective refrigeration cycle devices 10A based on the information of a spike signal. The processor 51 determines that the refrigerant pipe 15 has reached the limit of use and has substantially reached its lifetime at the point in time at which the spike signal is detected. A local corrosion of copper proceeds rapidly. Therefore, the processor 51 predicts that the refrigerant pipe 15 will reach its end of lifetime within a predetermined time period from the point in time at which the spike signal is detected. The lifetime of the refrigerant pipe 15 means a point in time at which the refrigerant pipe 15 becomes penetrated due to a corrosion, and the remaining thickness becomes 0. The phrase "becoming penetrated due to a corrosion" means that a hole is formed in the refrigerant pipe 15 due to a corrosion. The predetermined time period may be determined based on past data. In other words, it is also possible to acquire the data concerning the point in time at which the spike signal is detected and the point in time at which the refrigerant pipe 15 becomes penetrated in the plurality of refrigeration cycle devices 10A, and to determine the predetermined time period based on such data.

The processor 51 may predict the time when the refrigerant pipe 15 will become penetrated due to a corrosion based on information such as the presence of a spike signal, the height of and/or the number of times a spike signal has appeared.

In Step ST5B, based on the predicted lifetime, the processor 51 in the processing device 50 determines the order quantity of the parts of the refrigeration cycle devices 10A. Specifically, the processor 51 calculates the number of the refrigeration cycle devices 10A including a refrigerant pipe 15 that will reach its lifetime within a predetermined period, and uses the calculated number to calculate an order quantity for the parts of the refrigeration cycle device 10A. For example, if there are 100 refrigeration cycle devices 10A including a refrigerant pipe 15 that will reach the end of its lifetime within a time period between March and April, 2025, it is possible to add 100 to the order quantity for the parts of the refrigeration cycle device 10A. Examples of the parts of a refrigeration cycle device 10A include a refrigerant pipe 15, refrigerant, and a corrosion sensor 30.

In this manner, by analyzing the corrosion detection result, it is possible to predict the lifetime of each of the plurality of refrigeration cycle devices 10A, and to determine an order quantity for the parts that will require a repair in the future.

[Advantageous effects]

With the refrigeration cycle system 1A according to the first embodiment, it is possible to achieve the following advantageous effects.

The refrigeration cycle system 1A according to the first embodiment of the present disclosure includes a plurality of refrigeration cycle devices 10A each of which includes the first heat exchanger 11, the compressor 12, the second heat exchanger 13, and the expansion mechanism 14, and the processing device 50 that communicates with the plurality of refrigeration cycle devices 10A via a network. Each of the plurality of refrigeration cycle devices 10A further includes the refrigerant pipe 15, 15A, the corrosion sensor 30, 40, the first storage 17, and the first communicator 18. The refrigerant pipe 15,15A connects the first heat exchanger 11, the compressor 12, the second heat exchanger 13, and the expansion mechanism 14, and is configured to circulate the refrigerant. The plurality of corrosion sensors 30, 40 acquire information related to a corrosion of the refrigerant pipe, 15, 15A. The first storage 17 stores therein the information related to the corrosion, the information having been acquired by the plurality of corrosion sensors 30, 40. The first communicator 18 transmits the information related to the corrosion, the information being stored in the first storage 17, via the network. The processing device 50 includes the processor 51, the second storage 52, and the second communicator 53. The second storage 52 stores therein the program executed by the processor 51. The second communicator 53 receives the corrosion-related information via the network. The processor 51 detects a corrosion of the refrigerant pipe 15, 15A based on the information related to the corrosion, and analyzes a result of detecting the corrosion.

With such a configuration, it becomes possible to detect corrosions of the plurality of refrigeration cycle devices, and to analyze the result of the corrosion detection. In addition, it becomes possible to provide various services by analyzing the result of the corrosion detection.

The processor 51 in the processing device 50 predicts the lifetimes of the plurality of respective refrigeration cycle devices 10A based on the result of the corrosion detection, and determines the order quantity of the parts of the refrigeration cycle device 10A, based on the predicted lifetime.

With such a configuration, it becomes possible to appropriately determine the number of parts to be supplied at an appropriate timing, by predicting the lifetime of the refrigeration cycle devices 10A.

The plurality of corrosion sensors 30, 40 are disposed in the refrigerant pipe 15, 15A installed outdoors and refrigerant pipe 15, 15A disposed indoors. The processor 51 in the processing device 50 analyzes the result of detecting corrosions of the refrigerant pipe 15, 15A installed outdoors and the results of detecting corrosions of the refrigerant pipes 15, 15A disposed indoors.

With such a configuration, it becomes possible to acquire information related to indoor and outdoor corrosions. In addition, it becomes possible to analyze tendencies and/or causes of corrosions for the indoor and the outdoor refrigerant pipes 15, 15A, respectively.

The refrigerant pipe 15 contains copper as a main component. The plurality of corrosion sensors 30 are disposed at least one of on the outer surface of the refrigerant pipe 15 and around the refrigerant pipe 15, and measure corrosion currents. The processor 51 in the processing device 50 detects a corrosion of the refrigerant pipe 15 based on a change in the corrosion current.

With such a configuration, it becomes possible to detect a corrosion of a refrigerant pipe 15 containing copper as a main component. Specifically, the processor 51 in the processing device 50 detects a rise interval R1 in which the time derivative of the corrosion current increases at a rate equal to a threshold or higher, and a fall interval R2 in which the corrosion current falls immediately subsequently to the rise interval R1. If the rise interval R1 is shorter than 1 second, and the fall interval R2 is equal to 1 second or longer and shorter than 30 seconds, the processor 51 detects a corrosion of the refrigerant pipe 15. With this configuration, it is possible to make a further improvement in the detection accuracy of a corrosion of a refrigerant pipe 15.

The refrigerant pipe 15A contains aluminum as a main component, and has the sacrificial layer 15a less noble than the main component of the refrigerant pipe 15A on the outer surface of the refrigerant pipe 15A. The corrosion sensor 40 is disposed at least one of on the outer surface of the refrigerant pipe 15A and around the refrigerant pipe 15A, and measures the electric resistance. The processor 51 in the processing device 50 then detects a corrosion of the refrigerant pipe 15A based on a change in the electric resistance.

With such a configuration, it is possible to detect a corrosion of the refrigerant pipe 15A containing aluminum as a main component. Specifically, the corrosion sensor 40 includes the base material 41, the base material sacrificial layer 42, the power supply 43, the measuring unit 44, and the converter 45. The base material sacrificial layer 42 is provided on the surface of the base material 41, and has a surface potential lower than that of the base material 41. The power supply 43 generates a constant current flow in the base material 41 and the base material sacrificial layer 42. The measuring unit 44 measures the voltage applied to the base material 41 and the base material sacrificial layer 42. The converter 45 converts the voltage measured by the measuring unit 44 into an electric resistance. The main component of the base material 41 and the main component of the refrigerant pipe 15A are the same. The main component of the base material sacrificial layer 42 and the main component of the sacrificial layer 15a are the same. With this configuration, it is possible to improve the accuracy of the corrosion detection of the refrigerant pipe 15A.

The processor 51 in the processing device 50 then calculates the sectional area of a cross section including the base material 41 and the base material sacrificial layer 42, based on the electric resistance measured by the plurality of corrosion sensors 40. The processor 51 determines the degree by which the refrigerant pipe 15A is corroded based on the decreasing tendency of the sectional area, as a result of the corrosion. In this manner, it becomes possible to predict the lifetime of the refrigerant pipe 15A due to a corrosion.

An analysis method according to the first embodiment of the present disclosure is an analysis method for analyzing a plurality of refrigeration cycle devices 10A based on the corrosions of the refrigerant pipes 15, 15A, and is executed by a computer. The analysis method includes Step ST3 of acquiring information related to a corrosion, Step ST4 of detecting a corrosion, and Step ST5 of analyzing a result of detecting a corrosion. In Step ST3, the information related to corrosions of the refrigerant pipes 15, 15A is acquired, in each of the plurality of refrigeration cycle devices 10A. In the detecting step ST4, the corrosion of the refrigerant pipes 15, 15A is detected based on the information related to the corrosion. In the analyzing step ST5, a result of the corrosion detection is analyzed.

The analyzing step ST5 includes ST5A of predicting the lifetime of each of the plurality of refrigeration cycle devices 10A based on the result of detecting the corrosion, and ST5B of determining an order quantity of a part of the refrigeration cycle devices 10A based on the predicted lifetime.

Step ST3 of acquiring includes: acquiring information related to a corrosion of the refrigerant pipes 15, 15A installed outdoors, and acquiring information related to a corrosion of the refrigerant pipes 15,15A disposed indoors. The step of analyzing includes analyzing a result of detecting a corrosion of the refrigerant pipe 15, 15A installed outdoors and analyzing a detection result of corrosion of the refrigerant pipe 15, 15A disposed indoors.

With such a configuration, it is possible to acquire the same effects as those achieved by the refrigeration cycle system 1A according to the first embodiment, in an analysis method.

Explained in the first embodiment is an example in which the refrigeration cycle system 1A includes one processing device 50, but an embodiment is not limited thereto. For example, the refrigeration cycle system 1A may include a plurality of processing devices 50.

Explained in the first embodiment is an example in which the refrigeration cycle device 10A is an air conditioner, but an embodiment is not limited thereto. The refrigeration cycle device 10A may also be a refrigerator, for example.

Explained in the first embodiment is an example in which the refrigeration cycle device 10A includes a plurality of corrosion sensors 30, 40, but an embodiment is not limited thereto. The refrigeration cycle device 10A may include one or more corrosion sensors 30, 40.

Explained in the first embodiment is an example in which the two corrosion sensors 30, 40 are disposed indoor and outdoor refrigerant pipes 15, 15A, respectively, but an embodiment is not limited thereto. For example, one or more corrosion sensors 30 and 40 may be disposed on the indoor or outdoor refrigerant pipes 15, 15A.

In the first embodiment, an ACM sensor and an electric resistance sensor have been explained as examples of the corrosion sensors 30, 40, but an embodiment is not limited thereto. The corrosion sensors 30, 40 may be any sensors that are capable of detecting a corrosion.

Explained in the first embodiment is an example in which the processing device 50 detects corrosions of the refrigerant pipe 15, 15A based on information related to the corrosion, but an embodiment is not limited thereto. For example, the refrigeration cycle device 10A may detect a corrosion of the refrigerant pipe 15, 15A, based on corrosion-related information. In this case, the refrigeration cycle device 10A may transmit a result of a corrosion detection, instead of the corrosion-related information, to the processing device 50.

In the first embodiment, the operation of the refrigeration cycle system 1A has been explained using Steps ST1 to ST5, but an embodiment is not limited thereto. The steps involved in the operation may be increased or decreased in number, or split or integrated.

In the first embodiment, Steps ST1 to ST5 have been explained using the refrigeration cycle system 1A as a subject of the operation, but an embodiment is not limited thereto. A computer that includes a processor may execute Steps ST1 to ST5.

Explained in the first embodiment is an example in which the step ST5 of analyzing includes ST5A of predicting the lifetime of the plurality of refrigeration cycle devices 10A, and ST5B of determining an order quantity of a part. However, the present disclosure is not limited thereto. The step ST5 of analyzing may be configured in any way long as the result of the corrosion detection is be analyzed. For example, the step ST5 of analyzing may include determining the number of refrigeration cycle devices 10A that will fail within a predetermined time period, based on a result of a detection corrosion.

(Second embodiment)

A refrigeration cycle system and analysis method according to a second embodiment of the present disclosure will now be explained. In the second embodiment, difference with respect to the first embodiment will be mainly explained. In the second embodiment, the same or equivalent elements as those according to the first embodiment will be explained by assigning the same reference numerals thereto. In the second embodiment, descriptions that are redundant with those in the first embodiment will be omitted.

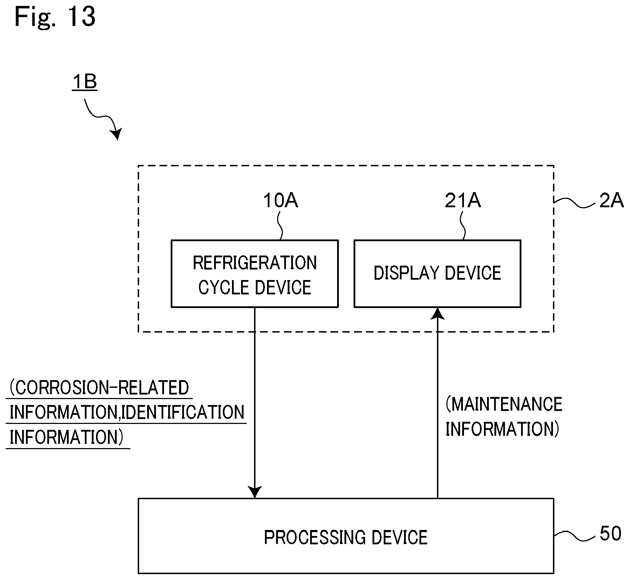

FIG. 13 is a schematic diagram of an example of a refrigeration cycle system 1B according to a second embodiment of the present disclosure. To keep the explanation simple, one refrigeration cycle device 10A and one display device 21A are illustrated in FIG. 13, but an embodiment is not limited thereto.

The second embodiment is different from the first embodiment in that identification information is transmitted from the plurality of refrigeration cycle devices 10A to the processing device 50, that the processing device 50 creates maintenance information, and that the maintenance information is displayed on the display device 21A.

In the second embodiment, an example of the refrigeration cycle device 10A in which a main component of the refrigerant pipe 15 is copper, and the corrosion sensor 30 is an ACM sensor will be explained, but an embodiment is not limited thereto.

As illustrated in FIG. 13, in a refrigeration cycle system 1B, the refrigeration cycle device 10A is installed in a building 2A, for example. Inside the building 2A, the display device 21A is installed.

The display device 21A is a device that displays information. The display device 21A is a display including a communicator, for example. The communicator communicates with the processing device 50 via a network. Specifically, the communicator includes a circuit that communicate with the processing device 50 in accordance with a predetermined communication protocol (e.g., LAN, Wi-Fi (registered trademark)) .

In the second embodiment, the display device 21A receives maintenance information for the refrigeration cycle device 10A from the processing device 50, and displays the maintenance information.

The display device 21A may be a display disposed on the refrigeration cycle device 10A. The display device 21A may be a controller that controls the refrigeration cycle device 10A. The display device 21A may be a mobile control terminal such as a smartphone.

To the refrigeration cycle device 10B, identification information is assigned. The identification information is assigned to the refrigeration cycle device 10B and stored in the first storage 17 at the time of manufacturing, for example. The identification information is information for identifying the refrigeration cycle device 10A. The identification information is associated with corrosion-related information. In the second embodiment, the identification information is also associated with the display device 21A.

The plurality of refrigeration cycle devices 10A cause the respective first communicators 18 to transmit the corrosion-related information and the identification information to the processing device 50 via the network.

In the processing device 50, the second communicator 53 receives the corrosion-related information and the identification information via the network. The processing device 50 determines, among the plurality of refrigeration cycle devices 10A, the refrigeration cycle devices 10A experiencing a corrosion based on the corrosion-related information and the identification information.

The processing device 50 detects corrosions of the refrigerant pipes 15 in the plurality of refrigeration cycle devices 10A based on corrosion-related information. Based on the result of detecting the corrosion, the processing device 50 creates maintenance information for maintaining the refrigeration cycle device 10A. The processing device 50 transmits the maintenance information to the display device 21A via the network. In the second embodiment, because the display device 21A is associated with the identification information of the refrigeration cycle device 10A, the processing device 50 can determine the display device 21A to which the maintenance information is to be transmitted, based on the identification information.

The maintenance information is information for maintaining the refrigeration cycle device 10A. Examples of the maintenance information include a message prompting an inspection, a repair, a replacement of a part of the refrigeration cycle device 10A, and/or a replacement of the refrigeration cycle device 10A, a message prompting a contact to a customer center, and a message notifying a failure in the refrigeration cycle device 10A.

[Operation]

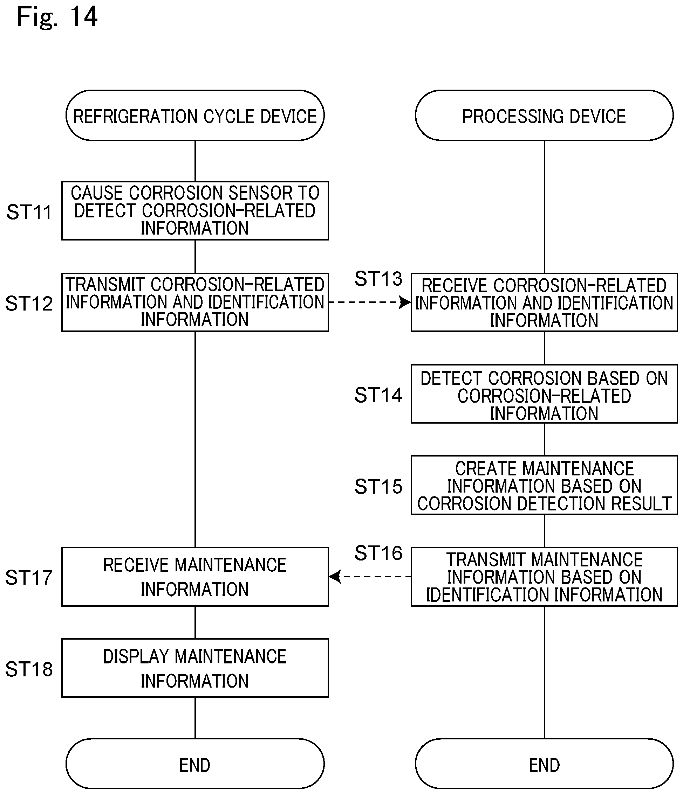

An example of an operation of the refrigeration cycle system 1B (analysis method) will now be explained with reference to FIG. 14. FIG. 14 is a flowchart illustrating an example of an operation of the refrigeration cycle system 1B according to the second embodiment of the present disclosure.

As illustrated in FIG. 14, in Step ST11, the corrosion sensor 30 in the refrigeration cycle device 10A acquires corrosion-related information. Specifically, in Step ST11, the corrosion sensor 30 acquires information of a corrosion current. The acquired corrosion current information is stored in the first storage 17.

In Step ST12, the first communicator 18 in the refrigeration cycle device 10A transmits corrosion-related information and identification information. Specifically, in Step ST12, the first communicator 18 transmits the corrosion current information stored in the first storage 17 and the identification information of the refrigeration cycle device 10A to the processing device 50 via the network.

In Step ST13, the second communicator 53 in the processing device 50 receives the corrosion-related information and the identification information. Specifically, in Step ST13, the second communicator 53 receives the corrosion current information and the identification information transmitted from the first communicator 18, via the network. The received corrosion current information and identification information are stored in the second storage 52.

In Step ST14, the processor 51 in the processing device 50 detects a corrosion based on the corrosion-related information. Specifically, in Step ST14, the processor 51 detects a corrosion of the refrigerant pipe 15 based on a change in the corrosion current.

In Step ST15, the processor 51 in the processing device 50 creates maintenance information based on the result of the corrosion detection. Specifically, in Step ST15, the processor 51 analyzes the result of the corrosion detection, and creates a message for maintaining the refrigeration cycle device 10A based on the analysis result. Step ST15 in the second embodiment corresponds to Step ST5 of analyzing according to the first embodiment.

For example, the maintenance information may include a message prompting for an inspection of a part of the refrigeration cycle device 10A, a message prompting for an inspection of a part of the refrigeration cycle device 10A, a message giving a notification of a failure of the refrigeration cycle device 10A, and/or a message prompting for contact the customer center.

For example, when there is a corrosion in the refrigerant pipe 15, the processor 51 may create a message prompting for an inspection of a part of the refrigeration cycle device 10A. The processor 51 may predict the lifetime of the refrigerant pipe 15 due to the corrosion based on the result of the corrosion detection, and create a message prompting for an inspection of the parts of the refrigeration cycle device 10A before the lifetime is reached. Alternatively, when it is determined that the refrigerant pipe 15 has become penetrated based on the result of the corrosion detection, the processor 51 may create a message giving a notification of a failure of the refrigeration cycle device 10A and/or a message prompting contact to a customer center.

The created maintenance information is associated with the identification information and stored in the second storage 52.

In Step ST16, the second communicator 53 in the processing device 50 transmits the maintenance information based on the identification information. Specifically, in Step ST16, the processor 51 determines the refrigeration cycle device 10A to which the maintenance information is to be transmitted based on the identification information. The second communicator 53 transmits the maintenance information to the display device 21A associated with the determined refrigeration cycle device 10A via the network.

In Step ST17, the display device 21A receives the maintenance information. Specifically, in Step ST17, the communicator of the display device 21A receives the maintenance information from the second communicator 53 in the processing device 50 via the network.

In Step ST18, the maintenance information is displayed by the display device 21A.

In this manner, it is possible to provide the maintenance information for maintaining the refrigeration cycle device 10A based on the result of the corrosion detection.

[Advantageous effects]

With the refrigeration cycle system 1B according to the second embodiment, it is possible to achieve the following advantageous effects.

The processor 51 in the processing device 50 creates maintenance information for maintaining the refrigeration cycle device 10A based on the result of the corrosion detection.

With such a configuration, it is possible to provide the maintenance information for maintaining the refrigeration cycle device 10A based on the result of the corrosion detection. Accordingly, it is possible to prompt the refrigeration cycle device 10A to perform appropriate maintenance at an appropriate timing. As a result, it is possible to prevent a failure of the refrigeration cycle device 10A.

The processor 51 in the processing device 50 transmits the maintenance information to the display device 21A where the maintenance information is to be displayed, via the network.

With such a configuration, a user can check the maintenance information easily. In addition, the user can easily recognize the timing and/or specifics of the maintenance required in maintaining the refrigeration cycle device 10A.

The analysis method according to the second embodiment of the present disclosure includes, as an analyzing step, Step ST15 of creating maintenance information for maintaining refrigeration cycle device 10A based on a result of a corrosion detection.

The analysis method according to the second embodiment of the present disclosure further includes Step ST18 of transmitting the maintenance information to the display device.

With this configuration, it becomes possible to achieve the same advantageous effects as those of refrigeration cycle system 1B according to the second embodiment, also as an analysis method.

Explained in the second embodiment is an example in which the maintenance information is transmitted based on the identification information, but an embodiment is not limited thereto. For example, the maintenance information may be transmitted based on the position information of the refrigeration cycle device 10A. In such a case, the refrigeration cycle device 10A may include a position information acquiring unit that acquires position information.

Explained in the second embodiment is an example in which the identification information is associated with the display device 21A. For example, it is possible for the identification information not to be associated with the display device 21A.

Explained in the second embodiment is an example in which the display device 21A is a display, but an embodiment is not limited thereto. For example, the display device 21A may be a speaker that makes a notification using voice information.

Explained in the second embodiment is an example in which the display device 21A is installed in the building 2A where the refrigeration cycle device 10A is installed, but an embodiment is not limited thereto. For example, it is possible for the display device 21A not to be installed in the building 2A.

Explained in the second embodiment is an example in which the maintenance information is displayed on one display device 21A, but an embodiment is not limited thereto. The maintenance information may be displayed on a plurality of display devices.

(Third embodiment)

A refrigeration cycle system and an analysis method according to a third embodiment of the present disclosure will now be explained. In the third embodiment, difference with respect to the first embodiment will be mainly explained. In the third embodiment, the same or equivalent elements as those according to the first embodiment will be explained by assigning the same reference numerals thereto. In the third embodiment, descriptions that are redundant with those in the first embodiment will be omitted.

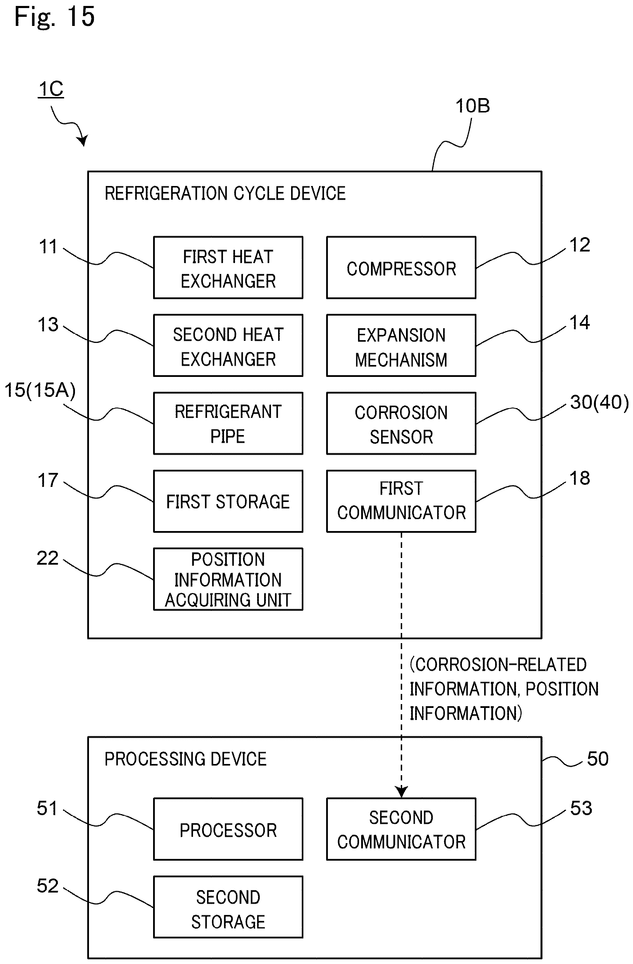

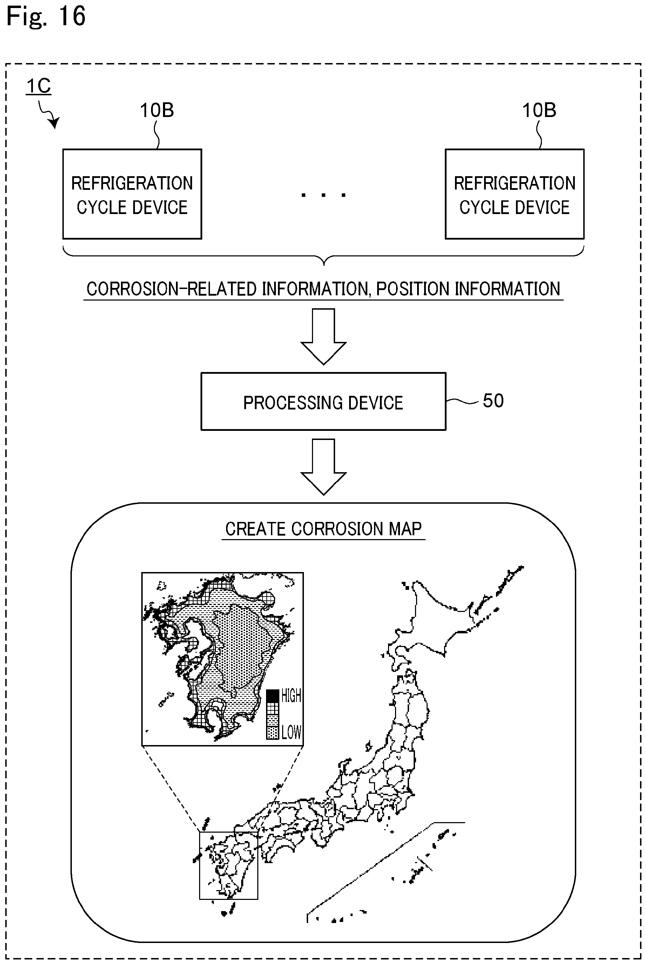

FIG. 15 is a block diagram of an example of a refrigeration cycle system 1C according to the third embodiment of the present disclosure. FIG. 16 is a schematic diagram for explaining an example of the refrigeration cycle system 1C according to the third embodiment of the present disclosure.

The third embodiment is different from the first embodiment in that the refrigeration cycle device 10B includes a position information acquiring unit 22, and that a corrosion map is created.

In the third embodiment, an example of a refrigeration cycle device 10B in which the main component of the refrigerant pipe 15 is copper and the corrosion sensor 30 is an ACM sensor will be explained, but an embodiment is not limited thereto.

As illustrated in FIG. 15, in the refrigeration cycle system 1C, the refrigeration cycle device 10B includes a position information acquiring unit 22.

<Position information acquiring unit>

The position information acquiring unit 22 acquires position information of the refrigeration cycle device 10B. For example, the position information acquiring unit 22 includes a global positioning system (GPS) module that detects a position indicating a current position of the refrigeration cycle device 10B in a geographic coordinate system. The GPS module receives a radio wave from a GPS satellite, and measures the latitude and the longitude of the point where the radio wave is received. The GPS module generates position information indicating the measured latitude and longitude.

The position information acquired by the position information acquiring unit 22 is stored in the first storage 17. The position information is also associated with the corrosion-related information.

The refrigeration cycle device 10B causes the first communicator 18 to transmit the corrosion-related information and the position information to the processing device 50 via the network.

As illustrated in FIG. 16, in the processing device 50, the second communicator 53 receives the corrosion-related information and the position information via the network. The processing device 50 creates a corrosion map based on the corrosion-related information and the position information.

The corrosion map is a map indicating the degree by which the refrigerant pipe 15 has corroded, in each of the plurality of refrigeration cycle devices 10B. For example, the corrosion map may be a map indicating the degree of corrosions in stages. For example, the corrosion map may be a map indicating the degree of corrosions in four stages over a map of Japan.

[Operation]

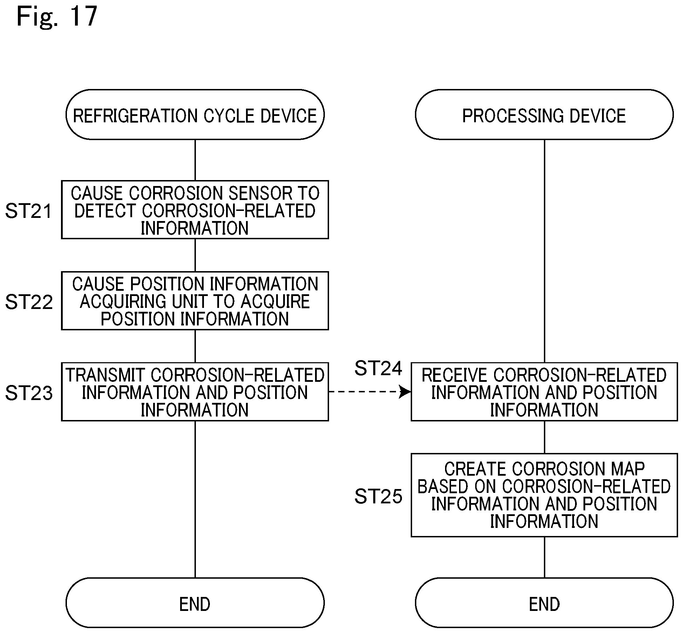

An example of an operation of the refrigeration cycle system 1C (analysis method) will be now be explained with reference to FIG. 17. FIG. 17 is a flowchart illustrating an example of an operation of the refrigeration cycle system 1C according to the third embodiment of the present disclosure.

As illustrated in FIG. 17, in Step ST21, the corrosion sensor 30 of the refrigeration cycle device 10B acquires the corrosion-related information. Specifically, in Step ST21, the corrosion sensor 30 acquires information of a corrosion current. The acquired corrosion current information is stored in the first storage 17.

In Step ST22, the position information acquiring unit 22 in the refrigeration cycle device 10B acquires the position information of the refrigeration cycle device 10B. Specifically, in Step ST22, the position information acquiring unit 22 receives a radio wave from a GPS satellite, and measures the latitude and the longitude of the point where the radio wave is received. The position information indicating the measured latitude and longitude is stored in the first storage 17.

In Step ST23, the first communicator 18 in the refrigeration cycle device 10B transmits the corrosion-related information and the position information. Specifically, in Step ST23, the first communicator 18 transmits the corrosion current information stored in the first storage 17 and the position information of the refrigeration cycle device 10B to the processing device 50 via the network.

In Step ST24, the second communicator 53 in the processing device 50 receives the corrosion-related information and the position information. Specifically, in Step ST24, the second communicator 53 receives the corrosion current information and the position information transmitted from the first communicator 18, via the network. The received corrosion current information and position information are stored in the second storage 52.

In Step ST25, the processor 51 in the processing device 50 creates a corrosion map based on the corrosion-related information and the position information. Specifically, in Step ST25, the processor 51 detects a corrosion of the refrigerant pipe 15 based on a change in the corrosion current. The processor 51 also evaluates the degree by which the refrigerant pipe 15 has corroded in stages, and displays the evaluation result on the map. In this manner, a corrosion map is created. Step ST25 according to the third embodiment corresponds to Step ST5 of analyzing according to the first embodiment.

For example, the processor 51 evaluates the degree of corrosion in four stages. The degree of corrosion means, for example, the degree by which the corrosion has proceeded. The processor 51 evaluates the degree of corrosion in each of the plurality of refrigeration cycle devices 10B. The processor 51 also associates information indicating the evaluated degree of corrosion with the position information. As described above, by associating the information indicating the degrees of corrosions of the plurality of refrigeration cycle devices 10B to the respective pieces of position information, it becomes possible to display the information of the degree of corrosions on the map. In this manner, a corrosion map can be created. The created corrosion map is stored in the second storage 52.

As described above, by using the corrosion-related information and the position information of the plurality of refrigeration cycle devices 10B, it becomes possible to create a corrosion map indicating the degree of corrosions.

[Advantageous effects]

With the refrigeration cycle system 1C according to the third embodiment, it is possible to achieve the following advantageous effects.

Each of the plurality of refrigeration cycle devices 10B further includes the position information acquiring unit 22 that acquires the position information of the refrigeration cycle device 10B. Each of the plurality of refrigeration cycle devices 10B causes the first communicator 18 to transmit the position information via the network. The processing device 50 causes the second communicator 53 to receive the position information, via the network. The processing device 50 also creates a corrosion map indicating the degrees of corrosions of the refrigerant pipes 15 in the plurality of refrigeration cycle devices 10B based on the corrosion-related information and the position information.

With such a configuration, it is possible to provide a corrosion map indicating the degrees of corrosions of the refrigerant pipes 15 in the plurality of refrigeration cycle devices 10B. As a result, it is possible to get a grasp of the conditions of the corrosions in respective regions. For example, with a corrosion map, it becomes possible to determine whether troubles caused by corrosions are local, regional, or countrywide. With this, based on the corrosion map, it becomes possible to rationally correct production plans, distributions, and/or supplies of the parts of the refrigeration cycle device 10B. For example, the parts can be supplied preferentially to a region where the degree of corrosions is high in the corrosion map. Alternatively, it is also possible to identify information of an environment where corrosion is likely to occur based on the corrosion map, and to change the quality of parts of the refrigeration cycle device 10B or to change the material of the refrigerant pipe 15, based on the environment information.

When a flammable refrigerant or a refrigerant containing a harmful substance is used as the refrigerant, it is also possible to identify a region where there is high risk of a refrigerant leakage based on the degrees of corrosions, and to issue an alarm across the region.

When the plurality of corrosion sensors 30 are disposed on the indoor refrigerant pipe 15 and the outdoor refrigerant pipe 15, the processing device 50 can create a corrosion map of the indoor refrigerant pipes 15 and a corrosion map of the outdoor refrigerant pipes 15. With this, it is possible to get a grasp of the information about the indoor corrosions and information about the outdoor corrosions. For example, it is possible to identify a cause of indoor corrosions and a cause of outdoor corrosions, respectively, and to use these factors in changing the design of the refrigeration cycle device 10B.

The analysis method according to the third embodiment of the present disclosure further includes Step ST24 of acquiring position information of each of the plurality of refrigeration cycle devices 10B. The analysis method includes, as an analyzing step, Step ST25 of creating a corrosion map indicating degrees of corrosions of the refrigerant pipes 15 in the plurality of refrigeration cycle devices 10B based on the corrosion-related information and the position information.

With this configuration, it becomes possible to achieve the same advantageous effects as those of refrigeration cycle system 1C according to the third embodiment, also as an analysis method.

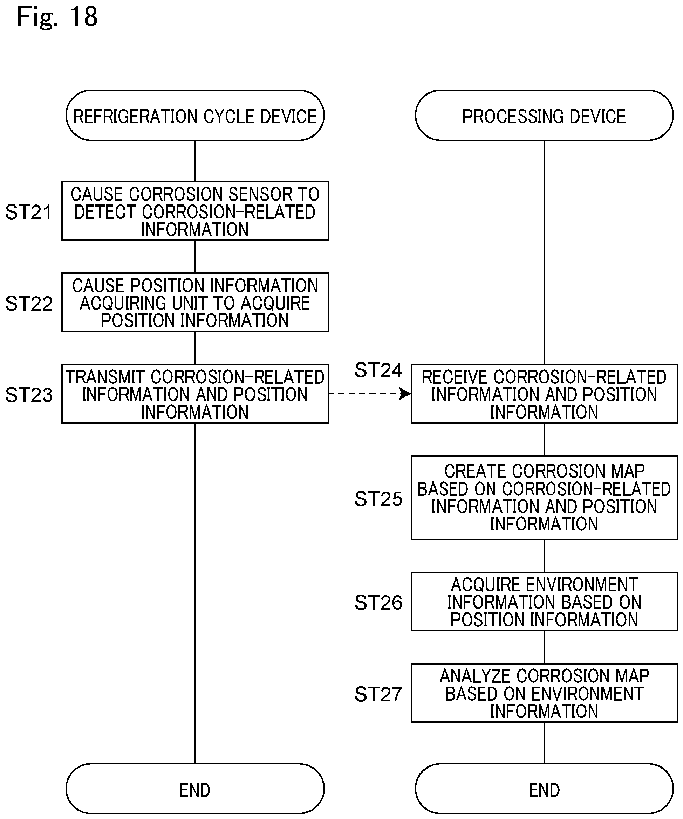

In addition, by creating a corrosion map, it becomes possible to use the corrosion map in various services. An example of the use of the corrosion map will now be explained with reference to FIG. 18.

FIG. 18 is a flowchart illustrating an operation of a refrigeration cycle device according to a modification of the third embodiment of the present disclosure. In the example illustrated in FIG. 18, Steps ST21 to ST25 are the same as Steps ST21 to ST25 illustrated in FIG. 17. Therefore, explanations thereof are omitted.

As illustrated in FIG. 18, in Step ST26, the second communicator 53 in the processing device 50 acquires environment information related to the environment where the refrigeration cycle device 10B is located, based on the position information. For example, the environment information includes information of a factor that may affect the corrosion, such as a substance that is present around the refrigeration cycle device 10B. The environment information is stored in the first storage 17.

In Step ST27, the processor 51 in the processing device 50 analyzes the corrosion map based on the environment information. For example, in Step ST27, the processor 51 identifies a region where the corrosions have proceeded further from a corrosion map, and identifies a cause of the corrosions based on the environment information. For example, when regions where the degree of corrosion is high are concentrated along the sea, the processor 51 determines that the corrosion is caused by salt damage. In this case, it is possible to take measures against salt damage, such as changing the design of parts of the refrigeration cycle device 10B installed in the region to those resistant against the salt damage.

When the plurality of corrosion sensors 30 are disposed on the indoor refrigerant pipe 15 and the outdoor refrigerant pipe 15, the processing device 50 acquires the indoor environment information and the outdoor environment information. In this manner, the processing device 50 can determine the cause of the corrosion of the refrigerant pipe 15 disposed indoors based on the corrosion map of the indoor refrigerant pipes 15 and the indoor environment information. In addition, the processing device 50 can determine a cause of the corrosions of the refrigerant pipes 15 installed outdoors, based on the corrosion map of the refrigerant pipe 15 installed outdoors and the outdoor environment information. As a result, it becomes possible to take measures against indoor and outdoor corrosions, respectively.

As described above, by analyzing the corrosion map based on the environment information, it becomes possible to identify a cause of a corrosion. In addition, it becomes possible to take measures such as a change in the design and/or the material of the refrigeration cycle device 10B, against the identified cause of corrosion.

Explained in the third embodiment is an example in which the corrosion map is a map representing the degree of corrosion in four stages, but an embodiment is not limited thereto. The corrosion map may be a map indicating the degrees of the progress of corrosions.

Explained in the third embodiment is an example in which the refrigeration cycle device 10B includes the position information acquiring unit 22, but an embodiment is not limited thereto. For example, when the user can input the position information, it is possible for the refrigeration cycle device 10B not to include the position information acquiring unit 22.

(Fourth embodiment)

A refrigeration cycle system and an analysis method according to a fourth embodiment of the present disclosure will now be explained. In the fourth embodiment, difference with respect to the first embodiment will be mainly explained. In the fourth embodiment, the same or equivalent elements as those according to the first embodiment will be explained by assigning the same reference numerals thereto. In the fourth embodiment, descriptions that are redundant with those in the first embodiment will be omitted.

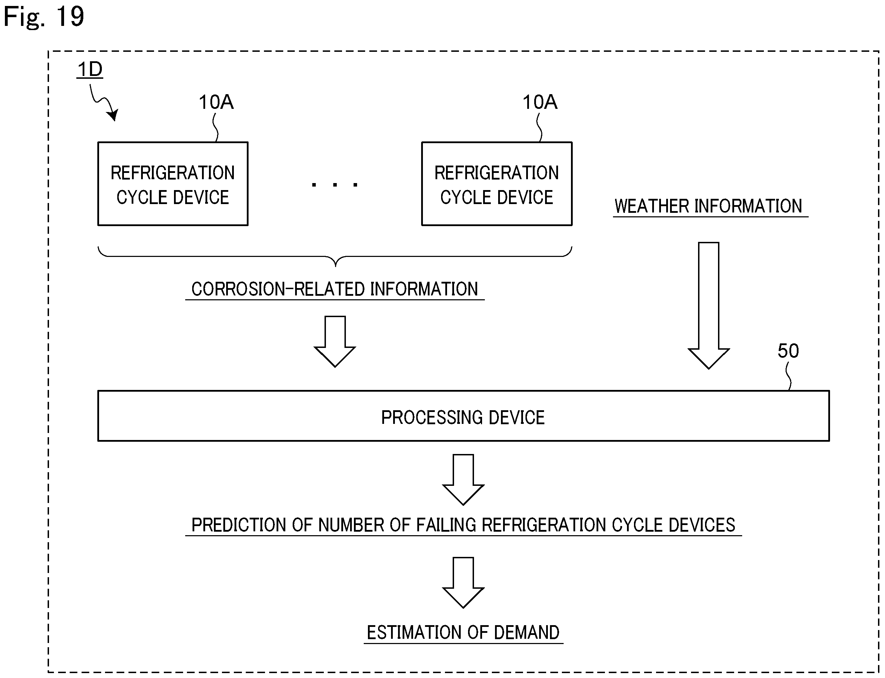

FIG. 19 is a schematic diagram for explaining an example of a refrigeration cycle system 1D according to the fourth embodiment of the present disclosure.

The fourth embodiment is different from the first embodiment in that the processing device 50 acquires weather information, that the processing device 50 predicts the lifetime of a refrigerant pipe based on the corrosion-related information and the weather information, and that the processing device 50 estimates a demand for the refrigeration cycle device 10A.

In the fourth embodiment, an example of the refrigeration cycle device 10A in which a main component of the refrigerant pipe 15 is copper, and the corrosion sensor 30 is an ACM sensor will be explained, but an embodiment is not limited thereto.

As illustrated in FIG. 19, in the refrigeration cycle system 1D, the processing device 50 acquires weather information. Specifically, the processing device 50 causes the second communicator 53 to acquire weather information related to the weather of the regions where the plurality of refrigeration cycle devices 10A are located. The weather information means information related to changes in the temperature and the atmospheric pressure, the atmospheric conditions, and the atmospheric phenomena such as rain and wind. For example, the weather information may include information such as very hot summer, cold summer, and warm winter. The weather information may also include information such as wetting degrees, wind speeds, and temperatures.

The processing device 50 predicts the lifetime of a refrigerant pipe 15 based on the corrosion-related information and the weather information. Specifically, the processing device 50 detects a corrosion of the refrigerant pipe 15 based on the corrosion-related information. The processing device 50 predicts the lifetime of the refrigerant pipe 15 due to a corrosion based on the result of the corrosion detection and on the weather information.

The processing device 50 predicts the number of failures of the refrigeration cycle device 10A based on the lifetime of the refrigerant pipe 15 due to a corrosion. Specifically, the processing device 50 calculates the number of refrigeration cycle devices 10A in which the refrigerant pipe 15 will reach its lifetime within a predetermined time period.

The processing device 50 estimates a demand for the refrigeration cycle device 10A based on the predicted number of failures. The demand includes a demand for replacements of the refrigeration cycle device 10A. For example, the processing device 50 estimates the demand for replacements of the refrigeration cycle device 10A based on the predicted number of failures, and calculates a prediction of the number of sales of the refrigeration cycle device 10A.

[Operation]

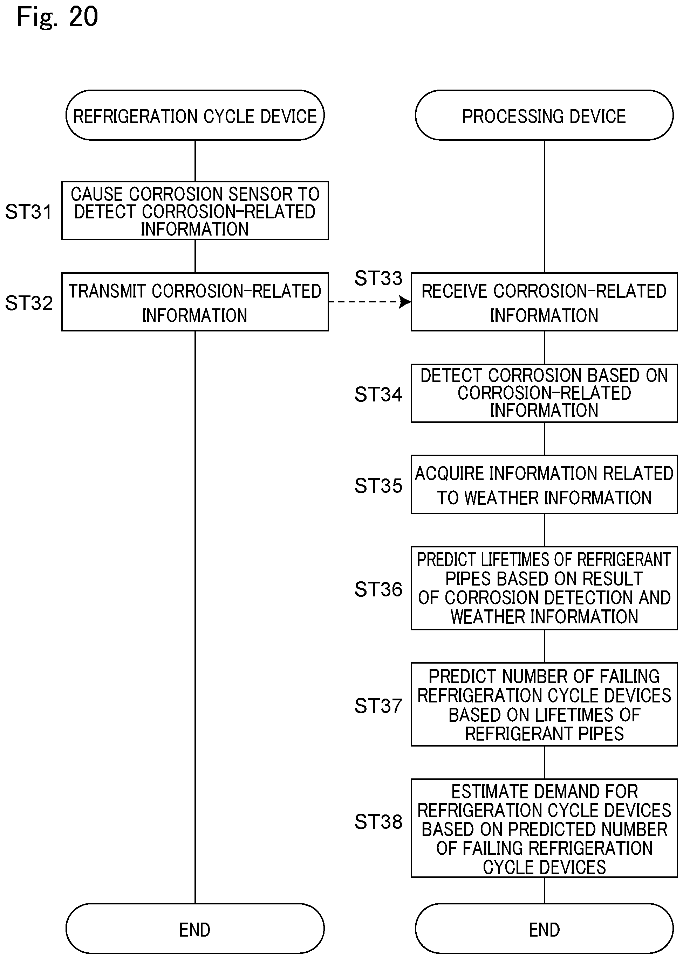

An example of an operation of the refrigeration cycle system 1D (analysis method) will be now be explained with reference to FIG. 20. FIG. 20 is a flowchart illustrating an example of an operation of the refrigeration cycle system 1D according to the fourth embodiment of the present disclosure. Note that, because Steps ST31 to ST34 illustrated in FIG. 20 are the same as Steps ST1 to ST4 illustrated in FIG. 11, detailed explanations thereof are omitted.

As illustrated in FIG. 20, in Step ST31, the corrosion sensor 30 in the refrigeration cycle device 10A acquires corrosion-related information. In Step ST32, the first communicator 18 in the refrigeration cycle device 10A transmits the corrosion-related information to the processing device 50. In Step ST33, the second communicator 53 in the processing device 50 receives the corrosion-related information. In Step ST34, the processor 51 in the processing device 50 detects corrosions of the refrigerant pipe 15 based on the corrosion-related information.

In Step ST35, the processing device 50 causes the second communicator 53 to acquire weather information related to the weather of the regions where the plurality of refrigeration cycle devices 10A are located. Specifically, in Step ST35, the second communicator 53 acquires the weather information from an information provider providing weather information. Examples of the information provider of the weather information include the Meteorological Agency and a facility that acquires weather information. The acquired weather information is stored in the second storage 52.

In Step ST36, the processor 51 in the processing device 50 predicts the lifetime of the refrigerant pipe 15 due to a corrosion, based on the result of the corrosion detection and the weather information. For example, when the weather information indicates that there are many very hot days during a summer season, the processing device 50 estimates that the time length and the frequency of use of the refrigeration cycle device 10A will increase, and predicts that the progress of the corrosion of the refrigerant pipe 15 will be accelerated. When the weather information indicates that there are many cool summers during a summer season, by contrast, the processing device 50 estimates that the time length and the frequency of use of the refrigeration cycle device 10A will decrease, and predicts that the progress of the corrosion of the refrigerant pipe 15 will be delayed.

In Step ST37, the processor 51 in the processing device 50 predicts the number of failures of the refrigeration cycle device 10A, based on the lifetime of the refrigerant pipe 15 due to a corrosion. Specifically, in Step ST37, the processor 51 calculates, as the number of failures of the refrigeration cycle device 10A, the number of refrigeration cycle devices 10A in which the refrigerant pipe 15 will reach its lifetime once in every predetermined time period. The predetermined time period is, for example, one month. For example, if there are 100 refrigeration cycle devices 10A including a refrigerant pipe 15 that will reach its lifetime between June 1, 2021 and June 30, the processor 51 predicts 100 as the number of failures of the refrigeration cycle devices 10A.

In Step ST38, the processor 51 in the processing device 50 estimates the demand for the refrigeration cycle device 10A based on the predicted number of failures. Specifically, in Step ST38, the demand for replacements of the refrigeration cycle device 10A is estimated based on the predicted number of failures. The demand for replacements may be set to the same number as the predicted number of failures, or to a number acquired by multiplying a correction factor to the predicted number of failures. With this, it becomes possible to adjust the production of refrigeration cycle device 10A.

As described above, by using the corrosion-related information of the plurality of refrigeration cycle devices 10B and the weather information, it is possible to estimate the demand for the refrigeration cycle device 10A.

[Advantageous effects]

With the refrigeration cycle system 1D according to the fourth embodiment, it is possible to achieve the following advantageous effects.

The processing device 50 causes the second communicator 53 to acquire weather information related to the weather of the regions where the plurality of refrigeration cycle devices 10A are located. The processor 51 in the processing device 50 predicts the lifetime of the refrigerant pipe 15 due to a corrosion based on the result of the corrosion detection and on the weather information.

With this configuration, it becomes possible to predict the lifetime of the refrigerant pipe 15 due to the corrosion, accurately. For example, when there are many very hot summers, it is more likely for the frequency and the time of use of the refrigeration cycle device 10A to increase. Therefore, it is possible to predict that the lifetime of the refrigerant pipe 15 will be shorter. Alternatively, when there are many cool summers, it is more likely for the frequency and the time of use of the refrigeration cycle device 10A to decrease. Therefore, it is possible to predict that the lifetime of the refrigerant pipe 15 will be longer.

The processor 51 in the processing device 50 predicts the number of failures of the refrigeration cycle devices 10A based on the lifetime of the refrigerant pipes 15 due to a corrosion, and estimates the demand for the refrigeration cycle devices 10A based on the predicted number of failures.

With such a configuration, it becomes possible to estimate the demand for the refrigeration cycle devices 10A. Specifically, it is possible to predict the number of refrigeration cycle devices 10A that will fail within a predetermined time period, based on the predicted lifetime of the refrigeration cycle devices 10A. As a result, the demand for replacements of the refrigeration cycle device 10A can be predicted, and the production plan of the refrigeration cycle device 10A can be adjusted.

An analysis method according to the fourth embodiment of the present disclosure includes Step ST35 of acquiring weather information related to the weather of the regions where the plurality of refrigeration cycle devices 10A are located. The analysis method includes, as the step of analyzing, Step ST36 of predicting the lifetime of the refrigerant pipe based on the result of the corrosion detection and the weather information. The analysis method includes, as the analyzing step, Step ST37 of predicting the number of failures of the refrigeration cycle devices 10A based on the lifetime of the refrigerant pipe 15, and Step ST38 of estimating the demand for the refrigeration cycle devices 10A based on the predicted number of failures.

With such a configuration, also in an analysis method, it is possible to achieve the same effect as those of the refrigeration cycle system 1D according to the fourth embodiment.

Explained in the fourth embodiment is an example in which the processing device 50 estimates the demand for replacements of the refrigeration cycle device 10A, but an embodiment is not limited thereto. For example, the processing device 50 may estimate the demand for parts of the refrigeration cycle device 10A.

Explained in the first to the fourth embodiments are examples provided with the refrigeration cycle device 10, 10A, 10B and the processing device 50, but an embodiment is not limited thereto. For example, it is possible to implement the present disclosure only as the processing device 50, without providing the refrigeration cycle device 10, 10A, 10B.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

INDUSTRIAL APPLICABILITY

The refrigeration cycle system and the analysis method according to the present disclosure can detect corrosions in a plurality of refrigeration cycle devices, such as a plurality of air conditioners, and analyze the results of the corrosion detections.

Reference Numerals

| | |
|---|---|
| 1A, 1B, 1C, 1D | refrigeration cycle system |
| 2A | building |
| 10, 10A, 10B | refrigeration cycle device |
| 11 | first heat exchanger |
| 12 | compressor |
| 13 | second heat exchanger |
| 14 | expansion mechanism |
| 15, 15A | refrigerant pipe |
| 15a | sacrificial layer |
| 16 | four-way valve |
| 17 | first storage |
| 18 | first communicator |
| 19 | indoor unit |
| 20 | outdoor unit |

| 21A | display device |
|---|---|
| 22 | position information acquiring unit |
| 30 | corrosion sensor (ACM sensor) |
| 31 | base material |
| 32 | insulating layer |
| 33 | cathode electrode |
| 34 | conductive wire |
| 35 | insulating protection layer |
| 36 | measuring unit |
| 37 | water film |
| 40 | corrosion sensor (electric resistance sensor) |
| 41 | base material |
| 42 | base material sacrificial layer |
| 43 | power supply |
| 44 | measuring unit |
| 45 | converter |
| 46 | conductive wire |
| 47 | corroded portion |
| 48 | temperature sensor |
| 50 | processing device |
| 51 | processor |
| 52 | second storage |
| 53 | second communicator |

**Claims**

1. A refrigeration cycle system comprising:

a plurality of refrigeration cycle devices each of which includes a first heat exchanger, a compressor, a second heat exchanger, and an expansion mechanism; and
a processing device that communicates with the plurality of refrigeration cycle devices via a network, wherein
each of the plurality of refrigeration cycle devices includes:

a refrigerant pipe that connects the first heat exchanger, the compressor, the second heat exchanger, and the expansion mechanism, and through which a refrigerant is circulated; and
one or a plurality of corrosion sensors that acquire information related to a corrosion of the refrigerant pipe;
a first storage that stores therein the information related to the corrosion, the information being acquired by the one or the plurality of corrosion sensors; and
a first communicator that transmits the information related to the corrosion via the network, the information being stored in the first storage;

the processing device includes:

a processor;
a second storage that stores therein a program executed by the processor; and
a second communicator that receives the information related to the corrosion via the network, and

the processor is configured:

to detect a corrosion of the refrigerant pipe based on the information related to the corrosion; and
to analyze a result of detecting the corrosion.

2. The refrigeration cycle system according to claim 1, wherein the processor in the processing device is configured:

to predict a lifetime of each of the plurality of refrigeration cycle devices based on the result of detecting the corrosion; and
to determine a quantity of a part to be ordered, the part being that of the refrigeration cycle device, based on the predicted lifetime.

3. The refrigeration cycle system according to claim 1 or 2, wherein the processor in the processing device creates maintenance information for maintaining the refrigeration cycle devices, based on the result of detecting the corrosion.

4. The refrigeration cycle system according to claim 3, wherein the processor in the processing device transmits the maintenance information to a display device that displays the maintenance information, via a network.

5. The refrigeration cycle system according to any one of claims 1 to 4, wherein

each of the plurality of refrigeration cycle devices further comprises a position information acquiring unit that acquires position information of the refrigeration cycle device, and
each of the plurality of refrigeration cycle devices causes the first communicator to transmit the position information via the network, and
the processing device is configured:

to cause the second communicator to receive the position information via the network, and
to cause the processor to create a corrosion map indicating corrosion levels of the refrigerant pipes in the plurality of respective refrigeration cycle devices, based on the information related to the corrosion and the

**6.** The refrigeration cycle system according to claim 5, wherein the processing device is configured:

to cause the second communicator to acquire environment information related to environments where the refrigeration cycle devices are located, based on the position information, and to cause the processor to analyze the corrosion map based on the environment information.

**7.** The refrigeration cycle system according to any one of claims 1 to 6, wherein the processing device is configured:

to cause the second communicator to acquire weather information related to weather in regions where the plurality of respective refrigeration cycle devices are located, and to cause the processor to predict lifetimes of the refrigerant pipes due to the corrosions, based on the result of the corrosion detection and the weather information.

**8.** The refrigeration cycle system according to claim 7, wherein the processor in the processing device is configured:

to predict number of failing refrigeration cycle devices based on the lifetimes of the refrigerant pipes due to the corrosion; and to estimate a demand for refrigeration cycle devices, based on the predicted number of failing refrigeration cycle devices.

**9.** The refrigeration cycle system according to any one of claims 1 to 8, wherein the plurality of corrosion sensors are disposed on

a refrigerant pipe installed outdoors, a refrigerant pipe installed indoors, and the processor in the processing device is further configured to analyze:

a result of detecting the corrosion of the refrigerant pipe installed outdoors; and a result of detecting the corrosion of the refrigerant pipe installed indoors.

**10.** The refrigeration cycle system according to any one of claims 1 to 9, wherein

the refrigerant pipe contains copper as a main component, the one or the plurality of corrosion sensors are disposed on at least one of an outer surface of the refrigerant pipe and around the refrigerant pipe and are configured to measure corrosion currents, and the processor in the processing device may be configured to detect a corrosion of the refrigerant pipe based on a change in the corrosion currents.

**11.** The refrigeration cycle system according to any one of claims 1 to 9, wherein

the refrigerant pipe contains aluminum as a main component, and includes a sacrificial layer on an outer surface of the refrigerant pipe, the sacrificial layer being less noble than the main component of the refrigerant pipe, the one or the plurality of corrosion sensors are disposed on at least one of an outer surface of the refrigerant pipe and around the refrigerant pipe and configured to measure an electric resistance, and the processor in the processing device detects a corrosion of the refrigerant pipe based on a change in the electric resistance.

**12.** An analysis method for analyzing a plurality of refrigeration cycle devices based on a corrosion of a refrigerant pipe, the analysis method being executed by a computer and comprising:

acquiring information related to a corrosion of a refrigerant pipe, in each of the plurality of refrigeration cycle devices; detecting a corrosion of the refrigerant pipe based on the information related to the corrosion; and analyzing a result of detecting the corrosion.

**13.** The analysis method according to claim 12, wherein the analyzing comprises:

predicting a lifetime of each of the plurality of refrigeration cycle devices based on the result of detecting the corrosion; and determining a quantity of a part to be ordered, the part being that of the refrigeration cycle device, based on the predicted lifetime.

**14.** The analysis method according to claim 12 or 13, wherein the analyzing comprises creating maintenance information for maintaining the refrigeration cycle devices, based on the result of detecting the corrosion.

**15.** The analysis method according to claim 14, further comprising transmitting the maintenance information to a display device.

**16.** The analysis method according to any one of claims 12 to 15, further comprising acquiring position information of each of the plurality of refrigeration cycle devices, wherein
the analyzing comprises creating a corrosion map indicating a degree of corrosions of the refrigerant pipes in the plurality of respective refrigeration cycle devices based on the corrosion-related information and the position information.

**17.** The analysis method according to claim 16, further comprising acquiring environment information related to environments where the refrigeration cycle devices are located, based on the position information, the analyzing comprises causing the processor to analyze the corrosion map based on the environment information.

**18.** The analysis method according to any one of claims 12 to 17, further comprising acquiring weather information related to weather in regions where the plurality of refrigeration cycle devices are located, wherein
the analyzing comprises predicting lifetimes of the refrigerant pipes due to the corrosions, based on the result of the corrosion detection and the weather information.

**19.** The analysis method according to claim 18, wherein the analyzing comprises:

predicting number of failing refrigeration cycle devices based on the lifetimes of the refrigerant pipes due to the corrosion; and
estimating a demand for refrigeration cycle devices, based on the predicted number of failing refrigeration cycle devices.

**20.** The analysis method according to any one of claims 12 to 19, wherein the acquiring comprises:

acquiring information related to a corrosion of a refrigerant pipe installed outdoors; and
acquiring information related to a corrosion of a refrigerant pipe installed indoors, and
the analyzing comprises:

analyzing a result of detecting the corrosion of the refrigerant pipe installed outdoors; and
analyzing a result of detecting the corrosion of the refrigerant pipe installed indoors.

## Fig. 1

1A

| 10A | 10A | 10A |
|---|---|---|
| REFRIGERATION CYCLE DEVICE | REFRIGERATION CYCLE DEVICE | REFRIGERATION CYCLE DEVICE |

50

PROCESSING DEVICE

| REFRIGERATION CYCLE DEVICE | REFRIGERATION CYCLE DEVICE | REFRIGERATION CYCLE DEVICE |
|---|---|---|
| 10A | 10A | 10A |

Fig. 2

<u>1A</u>

10A

## REFRIGERATION CYCLE DEVICE

| 11 | FIRST HEAT EXCHANGER | COMPRESSOR | 12 |
| 13 | SECOND HEAT EXCHANGER | EXPANSION MECHANISM | 14 |
| 15(15A) | REFRIGERANT PIPE | CORROSION SENSOR | 30(40) |
| 17 | FIRST STORAGE | FIRST COMMUNICATOR | 18 |

(CORROSION-RELATED INFORMATION)

## PROCESSING DEVICE
50

| 51 | PROCESSOR | SECOND COMMUNICATOR | 53 |
| 52 | SECOND STORAGE | | |

Fig. 3

10A

14

13

11

30(40)

15(15A)

30(40)

16

15(15A)

12

19

20

Fig. 4

Fig. 5A

CORROSION CURRENT（μA）

ELAPSED TIME（sec）

Fig. 5B

CORROSION CURRENT（μA）

t1

t2

R1

R2

ELAPSED TIME（sec）

Fig. 6

15a

15A

Fig. 7

40

46

POWER
SUPPLY — 43

MEASURING
UNIT — 44

CONVERTER — 45

47  42

— 41

FIRST
STORAGE — 17

TEMPERATURE
SENSOR — 48

Fig. 8

Fig. 9

Fig. 10

Fig. 11

```
  ┌─────────────────────────────┐         ┌─────────────────────────────┐
  │  REFRIGERATION CYCLE DEVICE │         │      PROCESSING DEVICE      │
  └─────────────────────────────┘         └─────────────────────────────┘
                │                                        │
  ST1 ┌──────────────────────────┐                      │
      │ CAUSE CORROSION SENSOR TO│                      │
      │  DETECT CORROSION-RELATED│                      │
      │        INFORMATION       │                      │
      └──────────────────────────┘                      │
                │                        ST3            │
  ST2 ┌──────────────────────────┐            ┌──────────────────────────┐
      │ TRANSMIT CORROSION-RELATED│- - - - - ->│ RECEIVE CORROSION-RELATED │
      │        INFORMATION        │            │        INFORMATION        │
      └──────────────────────────┘            └──────────────────────────┘
                │                                        │
                │                        ST4 ┌──────────────────────────┐
                │                            │ DETECT CORROSION BASED ON │
                │                            │RECEIVED CORROSION-RELATED │
                │                            │        INFORMATION        │
                │                            └──────────────────────────┘
                │                                        │
                │                        ST5 ┌──────────────────────────┐
                │                            │     ANALYZE RESULT OF     │
                │                            │   CORROSION DETECTION     │
                │                            └──────────────────────────┘
                │                                        │
  ┌─────────────────────────────┐         ┌─────────────────────────────┐
  │             END             │         │             END             │
  └─────────────────────────────┘         └─────────────────────────────┘
```

Fig. 12

```
                    ┌─────────────────────────┐
                    │         START           │
                    └─────────────────────────┘
                                 │
         ┌──────────────────────────────────────────┐
         │        PREDICT LIFETIMES OF              │
ST5A     │   PLURALITY OF REFRIGERATION             │
         │ CYCLE DEVICES BASED ON RESULTS           │
         │    OF CORROSION DETECTIONS               │
         └──────────────────────────────────────────┘
                                 │
         ┌──────────────────────────────────────────┐
         │         DETERMINE ORDER                  │
ST5B     │  QUANTITY OF REFRIGERATION               │
         │   CYCLE DEVICES BASED ON                 │
         │     PREDICTED LIFETIMES                  │
         └──────────────────────────────────────────┘
                                 │
                    ┌─────────────────────────┐
                    │          END            │
                    └─────────────────────────┘
```

Fig. 13

1B

10A                           21A                    2A

REFRIGERATION          DISPLAY DEVICE
CYCLE DEVICE

(CORROSION-RELATED
INFORMATION,IDENTIFICATION          (MAINTENANCE
INFORMATION)                        INFORMATION)

PROCESSING DEVICE                   50

Fig. 14

```
    ┌─────────────────────────────┐              ┌─────────────────────────────┐
    │  REFRIGERATION CYCLE DEVICE │              │       PROCESSING DEVICE     │
    └─────────────────────────────┘              └─────────────────────────────┘
                  │                                            │
        ┌─────────────────────┐                               │
        │ CAUSE CORROSION     │                               │
ST11    │ SENSOR TO DETECT    │                               │
        │ CORROSION-RELATED   │                               │
        │ INFORMATION         │                               │
        └─────────────────────┘                               │
                  │                                            │
        ┌─────────────────────┐      ST13        ┌─────────────────────────────┐
        │ TRANSMIT CORROSION- │                  │ RECEIVE CORROSION-RELATED   │
ST12    │ RELATED INFORMATION │ - - - - - - - -▶ │ INFORMATION AND             │
        │ AND IDENTIFICATION  │                  │ IDENTIFICATION INFORMATION  │
        │ INFORMATION         │                  └─────────────────────────────┘
        └─────────────────────┘                               │
                  │                               ┌─────────────────────────────┐
                  │                               │ DETECT CORROSION BASED ON   │
                  │                     ST14      │ CORROSION-RELATED           │
                  │                               │ INFORMATION                 │
                  │                               └─────────────────────────────┘
                  │                                            │
                  │                               ┌─────────────────────────────┐
                  │                               │ CREATE MAINTENANCE          │
                  │                     ST15      │ INFORMATION BASED ON        │
                  │                               │ CORROSION DETECTION RESULT  │
                  │                               └─────────────────────────────┘
                  │                                            │
        ┌─────────────────────┐      ST16        ┌─────────────────────────────┐
        │ RECEIVE MAINTENANCE │                  │ TRANSMIT MAINTENANCE        │
ST17    │ INFORMATION         │ ◀- - - - - - - - │ INFORMATION BASED ON        │
        │                     │                  │ IDENTIFICATION INFORMATION  │
        └─────────────────────┘                  └─────────────────────────────┘
                  │                                            │
        ┌─────────────────────┐                               │
        │ DISPLAY MAINTENANCE │                               │
ST18    │ INFORMATION         │                               │
        └─────────────────────┘                               │
                  │                                            │
           ┌────────────┐                             ┌────────────┐
           │    END     │                             │    END     │
           └────────────┘                             └────────────┘
```

Fig. 15

1C

10B

REFRIGERATION CYCLE DEVICE

11 — FIRST HEAT EXCHANGER

12 — COMPRESSOR

13 — SECOND HEAT EXCHANGER

14 — EXPANSION MECHANISM

15(15A) — REFRIGERANT PIPE

30(40) — CORROSION SENSOR

17 — FIRST STORAGE

18 — FIRST COMMUNICATOR

22 — POSITION INFORMATION ACQUIRING UNIT

(CORROSION-RELATED INFORMATION, POSITION INFORMATION)

PROCESSING DEVICE

50

51 — PROCESSOR

53 — SECOND COMMUNICATOR

52 — SECOND STORAGE

## Fig. 16

1C

10B — REFRIGERATION CYCLE DEVICE  · · ·  10B — REFRIGERATION CYCLE DEVICE

CORROSION-RELATED INFORMATION, POSITION INFORMATION

PROCESSING DEVICE — 50

CREATE CORROSION MAP

HIGH
LOW

Fig. 17

REFRIGERATION CYCLE DEVICE

PROCESSING DEVICE

ST21 | CAUSE CORROSION SENSOR TO DETECT CORROSION–RELATED INFORMATION

ST22 | CAUSE POSITION INFORMATION ACQUIRING UNIT TO ACQUIRE POSITION INFORMATION

ST23 | TRANSMIT CORROSION–RELATED INFORMATION AND POSITION INFORMATION

ST24 | RECEIVE CORROSION–RELATED INFORMATION AND POSITION INFORMATION

ST25 | CREATE CORROSION MAP BASED ON CORROSION–RELATED INFORMATION AND POSITION INFORMATION

END

END

Fig. 18

```
┌─────────────────────────────┐                    ┌─────────────────────────────┐
│  REFRIGERATION CYCLE DEVICE  │                    │      PROCESSING DEVICE       │
└─────────────────────────────┘                    └─────────────────────────────┘
              │                                                   │
┌──────────────────────────────┐                                 │
│  CAUSE CORROSION SENSOR TO    │                                 │
│  DETECT CORROSION-RELATED     │  ST21                           │
│  INFORMATION                  │                                 │
└──────────────────────────────┘                                 │
              │                                                   │
┌──────────────────────────────┐                                 │
│  CAUSE POSITION INFORMATION   │                                 │
│  ACQUIRING UNIT TO ACQUIRE    │  ST22                           │
│  POSITION INFORMATION         │                                 │
└──────────────────────────────┘                                 │
              │                        ST24                       │
┌──────────────────────────────┐            ┌──────────────────────────────┐
│  TRANSMIT CORROSION-RELATED   │  - - - - ->│  RECEIVE CORROSION-RELATED   │
│  INFORMATION AND POSITION     │  ST23      │  INFORMATION AND POSITION    │
│  INFORMATION                  │            │  INFORMATION                 │
└──────────────────────────────┘            └──────────────────────────────┘
              │                                                   │
              │                        ┌──────────────────────────────┐
              │                        │  CREATE CORROSION MAP        │
              │                        │  BASED ON CORROSION-RELATED  │  ST25
              │                        │  INFORMATION AND POSITION    │
              │                        │  INFORMATION                 │
              │                        └──────────────────────────────┘
              │                                                   │
              │                        ┌──────────────────────────────┐
              │                        │  ACQUIRE ENVIRONMENT         │
              │                        │  INFORMATION BASED ON        │  ST26
              │                        │  POSITION INFORMATION        │
              │                        └──────────────────────────────┘
              │                                                   │
              │                        ┌──────────────────────────────┐
              │                        │  ANALYZE CORROSION MAP       │
              │                        │  BASED ON ENVIRONMENT        │  ST27
              │                        │  INFORMATION                 │
              │                        └──────────────────────────────┘
              │                                                   │
      ┌───────────────┐                              ┌───────────────┐
      │      END      │                              │      END      │
      └───────────────┘                              └───────────────┘
```

## Fig. 19

Fig. 19

1D

10A REFRIGERATION CYCLE DEVICE · · · 10A REFRIGERATION CYCLE DEVICE WEATHER INFORMATION

CORROSION-RELATED INFORMATION

50 PROCESSING DEVICE

PREDICTION OF NUMBER OF FAILING REFRIGERATION CYCLE DEVICES

ESTIMATION OF DEMAND

EP 4 202 322 A1

Fig. 20

```
  ( REFRIGERATION CYCLE DEVICE )              (     PROCESSING DEVICE     )
                 │                                         │
        ┌────────────────────┐                             │
        │ CAUSE CORROSION     │                            │
  ST31  │ SENSOR TO DETECT    │                            │
        │ CORROSION-RELATED   │                            │
        │ INFORMATION         │                            │
        └────────────────────┘                             │
                 │                  ST33                    │
        ┌────────────────────┐         ┌─────────────────────────┐
        │ TRANSMIT            │ - - - > │ RECEIVE CORROSION-      │
  ST32  │ CORROSION-RELATED   │         │ RELATED INFORMATION     │
        │ INFORMATION         │         └─────────────────────────┘
        └────────────────────┘                             │
                 │                       ┌─────────────────────────┐
                 │                       │ DETECT CORROSION BASED  │
                 │                 ST34  │ ON CORROSION-RELATED    │
                 │                       │ INFORMATION             │
                 │                       └─────────────────────────┘
                 │                                          │
                 │                       ┌─────────────────────────┐
                 │                 ST35  │ ACQUIRE INFORMATION     │
                 │                       │ RELATED TO WEATHER      │
                 │                       │ INFORMATION             │
                 │                       └─────────────────────────┘
                 │                                          │
                 │                       ┌─────────────────────────┐
                 │                       │ PREDICT LIFETIMES OF    │
                 │                       │ REFRIGERANT PIPES BASED │
                 │                 ST36  │ ON RESULT OF CORROSION  │
                 │                       │ DETECTION AND WEATHER   │
                 │                       │ INFORMATION             │
                 │                       └─────────────────────────┘
                 │                                          │
                 │                       ┌─────────────────────────┐
                 │                       │ PREDICT NUMBER OF       │
                 │                       │ FAILING REFRIGERATION   │
                 │                 ST37  │ CYCLE DEVICES BASED ON  │
                 │                       │ LIFETIMES OF            │
                 │                       │ REFRIGERANT PIPES       │
                 │                       └─────────────────────────┘
                 │                                          │
                 │                       ┌─────────────────────────┐
                 │                       │ ESTIMATE DEMAND FOR     │
                 │                       │ REFRIGERATION CYCLE     │
                 │                 ST38  │ DEVICES BASED ON        │
                 │                       │ PREDICTED NUMBER OF     │
                 │                       │ FAILING REFRIGERATION   │
                 │                       │ CYCLE DEVICES           │
                 │                       └─────────────────────────┘
                 │                                          │
            (   END   )                               (   END   )
```

## INTERNATIONAL SEARCH REPORT

| International application No. |
|---|
| **PCT/JP2021/017935** |

**A. CLASSIFICATION OF SUBJECT MATTER**

*F25B 49/02*(2006.01)i; *G01N 17/04*(2006.01)i; *F25B 47/00*(2006.01)i
FI: F25B49/02 A; F25B49/02 570Z; F25B47/00 A; G01N17/04

According to International Patent Classification (IPC) or to both national classification and IPC

**B. FIELDS SEARCHED**

Minimum documentation searched (classification system followed by classification symbols)

F25B1/00-49/04; G01N17/04; F24F1/00-13/32

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/239549 A1 (MITSUBISHI ELECTRIC CORP.) 19 December 2019 (2019-12-19) paragraphs [0011]-[0091], fig. 1-21 | 1-5, 9-16, 20 |
| A | paragraphs [0011]-[0091], fig. 1-21 | 6-8, 17-19 |
| Y | WO 2017/199569 A1 (MITSUBISHI ELECTRIC CORP.) 23 November 2017 (2017-11-23) paragraphs [0016], [0017] | 1-5, 9-16, 20 |
| A | paragraphs [0016], [0017] | 6-8, 17-19 |
| Y | WO 2017/216965 A1 (MITSUBISHI ELECTRIC CORP.) 21 December 2017 (2017-12-21) paragraphs [0020], [0021], fig. 3 | 5, 9-11, 16, 20 |
| A | paragraphs [0020], [0021], fig. 3 | 6-8, 17-19 |
| Y | JP 11-101543 A (MITSUBISHI ELECTRIC CORP.) 13 April 1999 (1999-04-13) paragraph [0047], fig. 5 | 5, 9-11, 16, 20 |
| A | paragraph [0047], fig. 5 | 6-8, 17-19 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2021/017935**

### C.    DOCUMENTS CONSIDERED TO BE RELEVANT

| Category* | Citation of document, with indication, where appropriate, of the relevant passages | Relevant to claim No. |
|---|---|---|
| Y | US 2005/0045483 A1 (CAO, Jieyu) 03 March 2005 (2005-03-03) paragraphs [0039]-[0041], [0058]-[0062], [0068], fig. 2, 3 | 10 |
| A | paragraphs [0039]-[0041], [0058]-[0062], [0068], fig. 2, 3 | 6-8, 17-19 |
| Y | JP 2018-81061 A (HITACHI, LTD.) 24 May 2018 (2018-05-24) paragraphs [0032]-[0035], [0038], [0041], [0044], fig. 4-6 | 11 |
| A | paragraphs [0032]-[0035], [0038], [0041], [0044], fig. 4-6 | 6-8, 17-19 |

Form PCT/ISA/210 (second sheet) (January 2015)

**INTERNATIONAL SEARCH REPORT**
Information on patent family members

International application No.

**PCT/JP2021/017935**

| Patent document cited in search report | | | Publication date (day/month/year) | Patent family member(s) | Publication date (day/month/year) |
|---|---|---|---|---|---|
| WO | 2019/239549 | A1 | 19 December 2019 | (Family: none) | |
| WO | 2017/199569 | A1 | 23 November 2017 | (Family: none) | |
| WO | 2017/216965 | A1 | 21 December 2017 | (Family: none) | |
| JP | 11-101543 | A | 13 April 1999 | (Family: none) | |
| US | 2005/0045483 | A1 | 03 March 2005 | CN      1590981      A | |
| JP | 2018-81061 | A | 24 May 2018 | US      2019/0353608      A1 paragraphs [0049]-[0052], [0055], [0058], [0061], fig. 4-6 WO      2018/092519      A1 KR  10-2019-0051016      A CN      109964120      A | |

Form PCT/ISA/210 (patent family annex) (January 2015)

**EP 4 202 322 A1**

REFERENCES CITED IN THE DESCRIPTION

**Patent documents cited in the description**

- JP 2008286441 A